(19) Europäisches Patentamt
European Patent Office
Office européen des brevets

(11) EP 4 293 060 A1

# (12) EUROPEAN PATENT APPLICATION

(43) Date of publication:
**20.12.2023 Bulletin 2023/51**

(21) Application number: **23178940.5**

(22) Date of filing: **13.06.2023**

(51) International Patent Classification (IPC):
***C08G 18/08*** (2006.01) ***C08G 18/09*** (2006.01)
***C08G 18/16*** (2006.01) ***C08G 18/18*** (2006.01)
***C08G 18/62*** (2006.01) ***C08G 18/70*** (2006.01)
***C08G 18/73*** (2006.01) ***C08G 18/79*** (2006.01)
***C08G 18/80*** (2006.01) ***C08G 64/30*** (2006.01)
***C09D 175/04*** (2006.01)

(52) Cooperative Patent Classification (CPC):
**C08G 18/73; C08G 18/0828; C08G 18/092; C08G 18/097; C08G 18/168; C08G 18/1875; C08G 18/6229; C08G 18/705; C08G 18/792; C08G 18/798; C08G 18/8016; C08G 18/8025; C08G 18/807; C08G 64/305; C09D 175/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.06.2022 CN 202210681613**
**18.08.2022 JP 2022130527**

(71) Applicant: **Asahi Kasei Kabushiki Kaisha**
**Tokyo 1000006 (JP)**

(72) Inventors:
- **Hong, Changfeng**
  **Tokyo, 100-0006 (JP)**
- **Fukuchi, Takashi**
  **Tokyo, 100-0006 (JP)**

(74) Representative: **Strehl Schübel-Hopf & Partner**
**Maximilianstrasse 54**
**80538 München (DE)**

## (54) POLYISOCYANATE COMPOSITION, BLOCKED POLYISOCYANATE COMPOSITION, POLYURETHANE RESIN COMPOSITION, COATING COMPOSITION AND COATING SUBSTRATE

(57) The present invention provides a polyisocyanate composition containing a hydrophilic polyisocyanate, wherein the hydrophilic polyisocyanate is a reaction product of a polyisocyanate, an anionic compound and an alcohol, the polyisocyanate is composed of one or more diisocyanates selected from the group consisting of an aliphatic diisocyanate, an alicyclic diisocyanate and an aromatic diisocyanate, the anionic compound contains an active hydrogen group and has a mass fraction of 0.1% by mass or more and 13.0% by mass or less, and the alcohol has an average number of hydroxyl groups per molecule of 2.0 or more and 3.5 or less and a number average molecular weight of 450 or less.

EP 4 293 060 A1

## Description

BACKGROUND OF THE INVENTION

Field of the Invention

The present invention relates to a polyisocyanate composition, a blocked polyisocyanate composition, a polyurethane resin composition, a coating composition and a coated substrate.

Description of the Related Art

In recent years, aqueous coating agents have been actively developed in order to reduce the amount of organic solvents used from the viewpoints of global environmental protection, occupational safety and health, and the like. Because two-component curable resin compositions, composed of a main agent (so-called polyol) containing a hydroxyl group and a polyisocyanate as a curing agent, can be cured even at room temperature and exhibit excellent performance such as mechanical performance, chemical resistance and durability, they are widely used in applications such as various coating materials, tackifiers and adhesives.

With regard to such two-component curable resin compositions using a polyisocyanate as a curing agent, solvent-based products are currently the mainstream, and aqueous products are still not widely used, except for some areas or applications.

Examples of the reasons for the above problem, in the case of a two-component curable resin composition using a polyisocyanate as a curing agent, include the following: in general, an aqueous curable resin composition is, as compared with a solvent-based curable resin composition, inferior in performance such as appearance, water resistance and weather resistance; the pot life is short due to the reaction occurring between the isocyanate group and the water in the aqueous main agent; since carbon dioxide gas is generated when the isocyanate group reacts with water, air bubbles and pinholes are generated, which may deteriorate the quality of the cured resin; and the drying properties are poor.

As a curing agent for an aqueous two-component curable resin composition, for example, Patent Document 1 discloses a polyisocyanate mixture that can be dispersed in water by introducing a specific ethylene oxide unit into a polyisocyanate.

Further, Patent Documents 2 and 3 disclose a curing agent for an aqueous two-component curable resin that is imparted with blendability with an aqueous main agent by containing a polyisocyanate having a specific structure and a specific viscosity.

PRIOR ART DOCUMENTS

[Patent Documents]

[Patent Document 1] Japanese Unexamined Patent Application, First Publication No. Hei 9-328654
[Patent Document 2] Japanese Patent No. 4806511
[Patent Document 3] International Patent Publication No. 2015/035673

SUMMARY OF THE INVENTION

Problems to be Solved by the Invention

However, in the polyisocyanate composition described in Patent Document 1, since a hydrophilic group in the polyisocyanate structure is bound by a urethane group, the number of functional groups of the isocyanate group is reduced, and curing properties such as drying properties, and the physical properties of coating films such as acid resistance are insufficient. Further, in the techniques described in Patent Documents 2 and 3, the durability of coating films such as acid resistance and salt spray resistance has still been insufficient.

The present invention has been made in view of the above circumstances, and provides a polyisocyanate composition having high chromaticity, low turbidity when diluted with a hydrophilic solvent, small changes in viscosity when blended with a main agent, and excellent acid resistance, alkali resistance, salt spray resistance, flex resistance, wear resistance and weather resistance when formed into a coating film.

Means for Solving the Problem

That is, the present invention includes the following aspects.

[1] A polyisocyanate composition containing a hydrophilic polyisocyanate, wherein the aforementioned hydrophilic polyisocyanate is a reaction product of a polyisocyanate, an anionic compound and an alcohol, the aforementioned polyisocyanate is derived from one or more diisocyanates selected from the group consisting of an aliphatic diisocyanate, an alicyclic diisocyanate and an aromatic diisocyanate, the aforementioned anionic compound contains an active hydrogen group and has a mass fraction of 0.1% by mass or more and 13.0% by mass or less, and the aforementioned alcohol has an average number of hydroxyl groups per molecule of 2.0 or more and 3.5 or less and a number average molecular weight of 450 or less.
[2] The polyisocyanate composition according to [1], wherein a mass fraction of the aforementioned alcohol in the aforementioned polyisocyanate composition is 0.01% by mass or more and 4.5% by mass or less.
[3] The polyisocyanate composition according to [1] or [2], wherein a mass fraction of the aforementioned alcohol in the aforementioned polyisocyanate composition is 0.01% by mass or more and 2.5% by mass or less.
[4] The polyisocyanate composition according to any one of [1] to [3], wherein a mass fraction of a cyclic trimer derived from a diisocyanate is 20.0% by mass or more and 70.0% by mass or less.
[5] The polyisocyanate composition according to any one of [1] to [4], wherein a mass fraction of a uretdione dimer is 0.01% by mass or more and 20.0% by mass or less.
[6] The polyisocyanate composition according to any one of [1] to [5], which has an isocyanate group concentration of 17.0% by mass or more and 24.0% by mass or less.
[7] The polyisocyanate composition according to any one of [1] to [6], further including a urea group and an isocyanurate group, wherein a molar ratio of the aforementioned urea group and the isocyanurate group (urea group/isocyanurate group) is 0.02/100 or more and 10.0/100 or less.
[8] The polyisocyanate composition according to any one of [1] to [7], further including a urethane group, wherein a molar ratio of the aforementioned urethane group and the aforementioned isocyanurate group (urethane group/isocyanurate group) is 0.5/100 or more and 50.0/100 or less.
[9] The polyisocyanate composition according to any one of [1] to [8], which has a viscosity of 400 mPa·s or more and 20,000 mPa·s or less at 25°C.
[10] The polyisocyanate composition according to any one of [1] to [11], wherein the aforementioned anionic compound is one or more sulfonic acids selected from the group consisting of a sulfonic acid containing a hydroxyl group and a sulfonic acid containing an amino group.
[11] The polyisocyanate composition according to [10], wherein a sulfonic acid group of the aforementioned anionic compound is neutralized with an inorganic base or an organic amine compound.
[12] The polyisocyanate composition according to any one of [1] to [11], wherein the aforementioned anionic compound is a compound represented by the following general formula (1),
[Chemical Formula 1]

$$HO - R^{11} - SO_3H \qquad (1)$$

(in the general formula (1), $R^{11}$ is a hydrocarbon group having 1 to 10 carbon atoms which may contain at least one member selected from the group consisting of a hydroxyl group, an ether bond, an ester bond, a carbonyl group, and an imino group; $R^{11}$ may contain a ring structure; and the aforementioned ring structure is an aromatic ring, a 5-membered or 6-membered ring containing two nitrogen atoms, or a 5-membered or 6-membered ring containing a nitrogen atom and an oxygen atom.)
[13] The polyisocyanate composition according to any one of [1] to [12], wherein the aforementioned anionic compound is a compound represented by the following general formula (2),

[Chemical Formula 2]

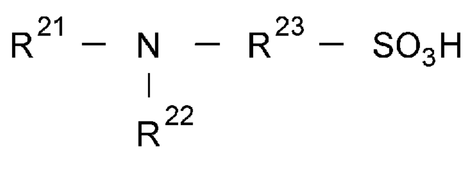

(2)

(in the general formula (2), $R^{21}$ and $R^{22}$ each independently represent a hydrogen atom or a hydrocarbon group

having 1 to 12 carbon atoms which may contain a hydroxyl group; at least one of $R^{22}$ and $R^{23}$ is a hydrogen atom; and $R^{23}$ is a hydrocarbon group having 1 to 12 carbon atoms which may contain a hydroxyl group.)

[14] A blocked polyisocyanate composition, which is a reaction product of the polyisocyanate composition according to any one of [1] to [13] and a thermally dissociable blocking agent.

[15] A polyurethane resin composition containing the polyisocyanate composition according to any one of [1] to [14].

[16] A coating composition containing the polyisocyanate composition according to any one of [1] to [15].

[17] A coated substrate coated with the coating composition according to [16].

Effects of the Invention

According to the above aspects, it is possible to provide: a polyisocyanate composition having high chromaticity, and low turbidity when diluted with a hydrophilic solvent; and a coating composition having small changes in viscosity when blended with a main agent, and excellent acid resistance, alkali resistance and salt spray resistance when formed into a coating film.

DETAILED DESCRIPTION OF THE INVENTION

Hereinafter, an embodiment for carrying out the present invention (hereinafter, referred to as "the present embodiment") will be described in detail.

It should be noted that the present invention is not limited to the following embodiments, and can be implemented with various modifications within the scope of the gist thereof.

<Polyisocyanate composition>

A polyisocyanate composition of the present embodiment contains a hydrophilic polyisocyanate.

The hydrophilic polyisocyanate is a reaction product obtained by reacting a polyisocyanate, an anionic compound, and an alcohol.

The polyisocyanate is derived from one or more diisocyanates selected from the group consisting of an aliphatic diisocyanate, an alicyclic diisocyanate and an aromatic diisocyanate.

The anionic compound contains an active hydrogen group and has a mass fraction of 0.1% by mass or more and 13.0% by mass or less.

The alcohol has an average number of hydroxyl groups per molecule of 2.0 or more and 3.5 or less and a number average molecular weight of 450 or less.

The details of each component will be described below.

<<Polyisocyanate>>

A polyisocyanate that constitutes the hydrophilic polyisocyanate is derived from one or more diisocyanates selected from the group consisting of an aliphatic diisocyanate, an alicyclic diisocyanate and an aromatic diisocyanate. It should be noted that the term "polyisocyanate" as used herein means a compound obtained by reacting diisocyanates with each other and, if necessary, with a compound other than a diisocyanate (for example, an alcohol, water, an amine or the like).

Examples of the aliphatic diisocyanate include, but are not limited to, 1,4-diisocyanatobutane, 1,5-diisocyanatopentane, ethyl (2,6-diisocyanato)hexanoate, 1,6-diisocyanatohexane (hereinafter also referred to as "HDI"), 1,9-diisocyanatononane, 1,12-diisocyanatododecane, and 2,2,4- or 2,4,4-trimethyl-1,6-diisocyanatohexane.

Examples of the alicyclic diisocyanate include, but are not limited to, 1,3- or 1,4-bis(isocyanatomethyl)cyclohexane (hereinafter also referred to as "hydrogenated XDI"), 1,3- or 1,4-diisocyanatocyclohexane, 3,5,5-trimethyl 1-isocyanato-3-(isocyanatomethyl)cyclohexane (hereinafter also referred to as "IPDI"), 4-4'-diisocyanato-dicyclohexylmethane (hereinafter also referred to as "hydrogenated MDI"), and 2,5- or 2,6-diisocyanatomethylnorbornane.

Although the aromatic diisocyanate is not particularly limited, examples thereof include xylylene diisocyanate, tolylene diisocyanate, and diphenylmethane diisocyanate.

Among them, HDI, IPDI, hydrogenated XDI or hydrogenated MDI is preferred as the diisocyanate from the viewpoint of pot life. In particular, a polyisocyanate containing 80% by mass or more of HDI among the entire diisocyanate components in the polyisocyanate is preferred from the viewpoint of achieving a good balance between dispersibility and water resistance.

Further, the polyisocyanate composition of the present embodiment may contain, in addition to the polyisocyanate derived from the diisocyanates described above, an aliphatic triisocyanate such as 1,3,6-triisocyanatohexane, 1,8-diisocyanato-4-isocyanatomethyloctane and 2-isocyanatoethyl-2,6-diisocyanato-hexanoate, or a polyisocyanate derived from these aliphatic triisocyanates.

(Binding group derived from isocyanate group)

The aforementioned polyisocyanate has a binding group derived from an isocyanate group of the above diisocyanate. Examples of the isocyanate group-derived binding group include groups shown in the following (a) to (i), and the like.

(a) an isocyanurate group obtained by cyclotrimerization of three isocyanate groups;
(b) an iminooxadiazinedione group obtained by cyclotrimerization of three isocyanate groups;
(c) an allophanate group obtained by reacting two isocyanate groups with one hydroxyl group;
(d) a uretdione group obtained by cyclodimerization of two isocyanate groups;
(e) a biuret group obtained by reacting three isocyanate groups with one water molecule;
(f) a urethane group obtained by reacting one isocyanate group with one hydroxyl group;
(g) a urea group obtained by reacting one isocyanate group with one primary or secondary amine;
(h) an acylurea group obtained by reacting one isocyanate group with one carboxy group;
(i) an oxadiazinetrione group obtained by reacting two isocyanate groups with one molecule of carbon dioxide.

Among them, it is preferable to contain a binding group having a 6-membered ring structure. Examples of the 6-membered ring structure include an isocyanurate group and an iminooxadiazinedione group.

(Isocyanurate group)

The isocyanurate group is a functional group obtained by cyclotrimerization of three isocyanate groups and has a structure represented by the following formula (III).

[Chemical Formula 3]

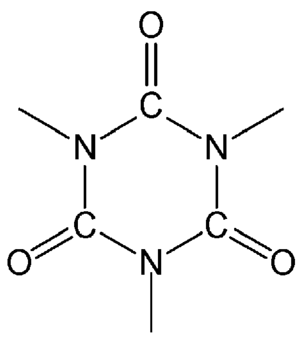

(III)

In a state where unreacted diisocyanates have been excluded, the content of the isocyanurate group is 50 mol% or more and 90 mol% or less with respect to the total number of moles (100 mol%) of the isocyanurate group, iminooxadiazinedione group, allophanate group and uretdione group. The lower limit value is more preferably 55 mol%, and still more preferably 60 mol%. Further, the upper limit value is more preferably 85 mol%, and still more preferably 80 mol%. When the content of the 6-membered ring structure is equal to or higher than the above lower limit value, the water resistance and weather resistance of the coating film to be obtained are further improved, whereas when the content is equal to or lower than the above upper limit value, the dispersibility tends to be excellent.

The above upper limit value and lower limit value of the content of the isocyanurate group can be arbitrarily combined. Examples of combinations include an isocyanurate group content of 55 mol% or more and 85 mol% or less, and 60 mol% or more and 80 mol% or less.

The content of each structure derived from isocyanate groups in the curing agent can be determined by $^{13}$C-NMR measurement. More specifically, in $^{13}$C-NMR measurement using Biospin Avance 600 (product name, manufactured by Bruker Corporation) (measurement solvent: chloroform-d, sample concentration: 60% (wt/vol), observation frequency: 150 MHz, number of integrations: 10,000 times), when the aliphatic diisocyanate is HDI, a signal of the carbon atoms of the carbonyl group in the 6-membered ring is observed around 148.6 ppm for the isocyanurate ring structure. Since there are three identical carbon atoms in the structure, 1/3 of the integrated value corresponds to the mole fraction of the structure.

(Iminooxadiazinedione group)

The iminooxadiazinedione group is a functional group obtained by cyclotrimerization of three isocyanate groups and has a structure represented by the following formula (IV).

[Chemical Formula 4]

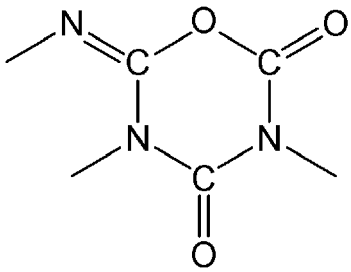

(I V)

In the polyisocyanate composition of the present embodiment, the molar ratio of the iminooxadiazinedione groups is preferably 0.5 mol% or more and 40.0 mol% or less, and more preferably 0.7 mol% or more and 30.0 mol% or less with respect to the total number of moles (100 mol%) of the isocyanurate group, iminooxadiazinedione group, allophanate group and uretdione group. When the molar ratio of the iminooxadiazinedione group is within the above range, the viscosity can be reduced and the dispersibility is excellent when formed into a coating composition. The molar ratio of the iminooxadiazinedione group can be determined by $^{13}C$-NMR measurement.

(Allophanate group)

The allophanate group is a functional group formed by a reaction between a hydroxyl group of an alcohol and an isocyanate group, and has a structure represented by the following formula (V).

[Chemical Formula 5]

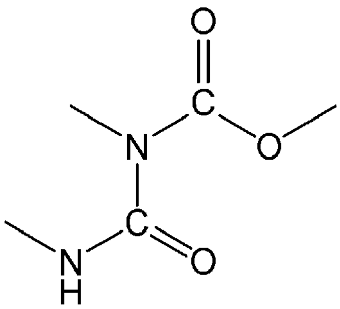

(V)

In the polyisocyanate composition of the present embodiment, the molar ratio of the allophanate group is preferably 1.0 mol% or more and 20.0 mol% or less, and more preferably 2.0 mol% or more and 16.0 mol% or less with respect to the total number of moles (100 mol%) of the isocyanurate group, iminooxadiazinedione group, allophanate group and uretdione group.

When the molar ratio of the allophanate group is within the above range, the dispersibility when formed into a coating composition and the appearance when formed into a coating film are excellent.

The molar ratio of the allophanate group can be determined, for example, by $^{13}C$-NMR measurement.

(Uretdione group)

The uretdione group is a functional group obtained by cyclodimerization of two isocyanate groups and has a structure represented by the following formula (VI). A polyisocyanate having a uretdione group has low viscosity and favorable dispersibility when formed into a coating composition.

[Chemical Formula 6]

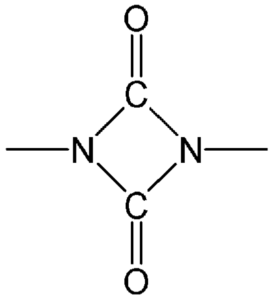

(V I)

In the polyisocyanate composition of the present embodiment, the molar ratio of the uretdione group is preferably 0.5 mol% or more and 30.0 mol% or less, and more preferably 1.0 mol% or more and 25.0 mol% or less with respect to the total number of moles (100 mol%) of the isocyanurate group, iminooxadiazinedione group, allophanate group and uretdione group. When the molar ratio of the uretdione group is within the above range, the dispersibility and pot life when formed into a coating composition and the appearance when formed into a coating film are excellent.

The molar ratio of the uretdione group can be determined, for example, by $^{13}C$-NMR measurement or $^{1}H$-NMR measurement.

Furthermore, the mass fraction of a uretdione dimer obtained by cyclodimerization of two diisocyanates is preferably 0.01% by mass or more and 20.0% by mass or less from the viewpoint of reducing the viscosity change and dilution turbidity at the time of blending.

The upper limit value of the mass fraction of the uretdione dimer is more preferably 18.0% by mass or less, and still more preferably 15.0% by mass or less, in view of acid resistance, alkali resistance, and salt spray resistance. Further, in view of viscosity reduction and dilution turbidity, it is more preferably 0.1% by mass or more, and still more preferably 0.5% by mass or more. The mass fraction of the uretdione dimer can be determined by GPC.

The above upper limit value and lower limit value of the mass fraction of the uretdione dimer can be arbitrarily combined. Examples of combinations include 0.1% by mass or more and 18.0% by mass or less, and 0.5% by mass or more and 15.0% by mass or less.

(Urea group)

The urea group is a functional group obtained by reacting one isocyanate group with one primary or secondary amine, or by reacting two isocyanate groups with water, and has a structure represented by the following formula (7).

[Chemical Formula 7]

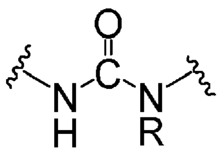

・・・(7)

In the polyisocyanate composition of the present embodiment, the molar ratio between the aforementioned urea group and the aforementioned isocyanurate group (urea group/isocyanurate group) is preferably 0.001/100 or more and 1/100 or less, and more preferably 0.002/100 or more and 0.1/100 or less. When the molar ratio of the urea group and the isocyanurate group is within the above range, the chromaticity and dilution turbidity tend to be excellent.

The molar ratio of the urea group and the isocyanurate group can be determined, for example, by $^{13}C$-NMR.

(Urethane group)

The urethane group is a functional group obtained by reacting one isocyanate group with one alcohol, and has a structure represented by the following formula (8).

[Chemical Formula 8]

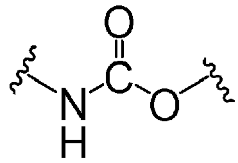

・・・ (8)

In the polyisocyanate composition of the present embodiment, the molar ratio between the aforementioned urethane group and the aforementioned isocyanurate group (urethane group/isocyanurate group) is preferably 0.2/100 or more and 20/100 or less, and more preferably 1.0/100 or more and 10/100 or less. When the molar ratio between the urethane group and the isocyanurate group is within the above range, the viscosity change during blending and acid resistance tend to be excellent.
The molar ratio of the urethane group can be determined, for example, by $^{13}C$-NMR or $^{1}H$-NMR.

(Other binding groups)

The polyisocyanate that constitutes the polyisocyanate composition of the present embodiment may further have one or more binding groups selected from the group consisting of a biuret group, an acylurea group, and an oxadiazinetrione group, in addition to the above-mentioned binding groups.
In the polyisocyanate composition of the present embodiment, the total molar ratio of other binding groups is preferably 0.01 mol% or more and 10 mol% or less with respect to the total number of moles (100 mol%) of the isocyanurate group, iminooxadiazinedione group, allophanate group and uretdione group.
The molar ratio of other binding groups can be determined, for example, by $^{13}C$-NMR measurement or $^{1}H$-NMR measurement.

(Cyclic trimer)

The mass fraction of the diisocyanate-derived cyclic trimer contained in the polyisocyanate composition of the present embodiment is preferably 20.0% by mass or more and 70.0% by mass or less. The lower limit value of the mass fraction is preferably 30.0% by mass, and more preferably 40.0% by mass, from the viewpoint of making the occurrence of viscosity change during blending unlikely. Further, the upper limit value is preferably 65.0% by mass, and more preferably 60.0% by mass, from the viewpoints of preventing turbidity after dilution and improving alkali resistance. The structure of the cyclic trimer includes an isocyanurate group and an iminooxadiazinedione group. The mass fraction of the cyclic trimer can be determined by GPC.
The above upper limit value and lower limit value of the mass fraction of the diisocyanate-derived cyclic trimer can be arbitrarily combined. Examples of combinations include 30.0% by mass or more and 65.0% by mass or less, and 40.0% by mass or more and 60.0% by mass or less.

[Isocyanate group concentration]

The average isocyanate group concentration of the polyisocyanate composition in the present embodiment is preferably 17.0% by mass or more and 24.0% by mass or less, more preferably 18.5% by mass or more and 23.5% by mass or less, and still more preferably 19.0% by mass or more and 23.0% by mass or less, from the viewpoint of improving coating film durability such as acid resistance, alkali resistance, and salt spray resistance.
The average isocyanate group concentration of the polyisocyanate composition can be measured by a titration method described in Examples below.

<<Method for producing polyisocyanate>>

The polyisocyanate contained in the polyisocyanate composition of the present embodiment can be obtained by carrying out, at once, an isocyanurate-forming reaction to form an isocyanurate group, an iminooxadiazinedione-forming reaction to form an iminooxadiazinedione group, an allophanate-forming reaction to form an allophanate group, a uretdione-forming reaction to form a uretdione group, and the like, in the presence of excess diisocyanates, and removing unreacted diisocyanates after completion of the reactions. At that time, other binding groups may be generated at the same time as the desired binding group generated under each condition.
Alternatively, the above reactions may be carried out separately, and the polyisocyanates obtained respectively

may be mixed in such a ratio that the molar ratio of each binding group is within the above range. Here, from the viewpoint of ease of production, it is preferable to carry out the above reactions at once to obtain the polyisocyanates, and from the viewpoint of freely adjusting the molar ratio of each binding group, it is preferable to produce them separately and then mix them.

[Method for producing polyisocyanate containing isocyanurate group]

Although the catalyst for deriving a polyisocyanate containing an isocyanurate group from a diisocyanate is not particularly limited, those exhibiting basicity are preferred, and specific examples thereof include a hydroxide and weak organic acid salt of a tetraalkylammonium, a hydroxide and weak organic acid salt of a hydroxyalkylammonium, an alkali metal salt of an alkyl carboxylic acid, a metal alcoholate, an aminosilyl group-containing compound, a Mannich base, a combination of a tertiary amine and an epoxy compound, and a phosphorus-based compound.

Examples of the tetraalkylammonium include tetramethylammonium and tetraethylammonium.

Examples of the weak organic acid include acetic acid and capric acid.

Examples of the hydroxyalkylammonium include trimethylhydroxypropylammonium, trimethylhydroxyethylammonium, triethylhydroxypropylammonium, and triethylhydroxyethylammonium.

Examples of the alkyl carboxylic acid include acetic acid, caproic acid, octylic acid, and myristic acid.

Examples of the alkali metal salt include tin, zinc, and lead.

Examples of the metal alcoholate include sodium alcoholate and potassium alcoholate.

Examples of the aminosilyl group-containing compound include hexamethyldisilazane and the like.

Examples of the phosphorus-based compound include tributylphosphine and the like.

The amount of these catalysts used is preferably 10 ppm by mass or more and 10,000 ppm by mass or less with respect to the total mass of diisocyanate (and alcohol, if necessary) as raw materials. In addition, in order to terminate the isocyanurate-forming reaction, the catalyst may be inactivated by addition of an acidic substance for neutralizing the catalyst, thermal decomposition, chemical decomposition, or the like. Examples of the acidic substance for neutralizing the catalyst include phosphoric acid and acidic phosphate esters.

The yield of polyisocyanate generally tends to be 10% by mass or more and 70% by mass or less. Polyisocyanates obtained in higher yields tend to have higher viscosities. The yield can be calculated from the mass ratio of the obtained polyisocyanate with respect to the total mass of the raw material components.

Although the reaction temperature for the isocyanurate-forming reaction is not particularly limited, it is preferably 50°C or higher and 200°C or lower, and more preferably 50°C or higher and 150°C or lower. When the reaction temperature is equal to or higher than the above lower limit value, the reaction tends to proceed more easily, and when the reaction temperature is equal to or lower than the above upper limit value, side reactions that cause coloration tend to be more suppressed.

After completion of the isocyanurate-forming reaction, it is preferable to remove unreacted diisocyanates by a thin film evaporator, extraction, or the like. Even if the polyisocyanate contains an unreacted diisocyanate, the content of the diisocyanate is preferably 3.0% by mass or less, more preferably 1.0% by mass or less, and still more preferably 0.5% by mass or less with respect to the total mass of the polyisocyanate. When the concentration of residual unreacted diisocyanates is within the above range, curability tends to be more excellent.

The concentration of residual unreacted diisocyanates is preferably 0% by mass.

That is, the concentration of residual unreacted diisocyanates is preferably 0% by mass or more and 3.0% by mass or less, more preferably 0% by mass or more and 1.0% by mass or less, and still more preferably 0% by mass or more and 0.5% by mass or less.

[Method for producing polyisocyanate containing iminooxadiazinedione group]

Although the catalyst for deriving a polyisocyanate containing an iminooxadiazinedione group from a diisocyanate is not particularly limited, for example, the following catalyst (1) or (2) generally known as an iminooxadiazinedione-forming reaction catalyst can be used.

(1) (Poly)hydrogen fluoride represented by a general formula M[Fn] or a general formula M[Fn(HF)m] (in the formula, m and n are integers that satisfy a relationship of m/n > 0, M is an n-charged cation (mixture) or one or more radicals with a total valence of n.)
(2) A compound composed of a compound represented by a general formula R1-CR'2-C(O)O- or a general formula R2=CR'-C(O)O-, and a quaternary ammonium cation or a quaternary phosphonium cation.

(In the formula, R1 and R2 each independently represents a linear, branched or cyclic saturated or unsaturated perfluoroalkyl group having 1 to 30 carbon atoms; and a plurality of R' groups each independently represents a hydrogen

atom, or an alkyl group or aryl group having 1 to 20 carbon atoms which may contain a hetero atom.)

Specific examples of the compound (1) ((poly)hydrogen fluoride) include a tetramethylammonium fluoride hydrate and tetraethylammonium fluoride.

Specific examples of the compound (2) include 3,3,3-trifluorocarboxylic acid, 4,4,4,3,3-pentafluorobutanoic acid, 5,5,5,4,4,3,3-heptafluoropentanoic acid, and 3,3-difluoroprop-2-enoic acid.

Among them, as the iminooxadiazinedione-forming reaction catalyst, the compound (1) is preferred from the viewpoint of availability, and the compound (2) is preferred from the viewpoint of safety.

The blending amount of the iminooxadiazinedione-forming reaction catalyst described above is preferably 10 ppm by mass or more and 1,000 ppm by mass or less with respect to the mass of the charged diisocyanate. The lower limit value thereof is more preferably 20 ppm by mass, still more preferably 40 ppm by mass, and particularly preferably 80 ppm by mass. The upper limit value thereof is more preferably 800 ppm by mass, still more preferably 600 ppm by mass, and particularly preferably 500 ppm by mass or less.

The blending amount of the iminooxadiazinedione-forming reaction catalyst is, for example, 20 ppm by mass or more and 800 ppm by mass or less, 40 ppm by mass or more and 600 ppm by mass or less, or 80 ppm by mass or more and 500 ppm by mass or less with respect to the mass of the charged diisocyanate.

Further, the iminooxadiazinedione-forming reaction temperature is preferably 40°C or higher and 120°C or lower. The lower limit value thereof is more preferably 50°C, and still more preferably 55°C. The upper limit value thereof is more preferably 100°C, still more preferably 90°C, and particularly preferably 80°C.

When the iminooxadiazinedione-forming reaction temperature is equal to or higher than the above lower limit value, it tends to be possible to maintain a higher reaction rate. When the iminooxadiazinedione-forming reaction temperature is equal to or lower than the above upper limit value, there is a tendency that coloration or the like of the polyisocyanate can be suppressed more effectively.

The iminooxadiazinedione-forming reaction temperature is, for example, 50°C or higher and 90°C or lower, or 55°C or higher and 80°C or lower.

[Method for producing polyisocyanate containing allophanate group]

Although the catalyst for deriving a polyisocyanate containing an allophanate group from a diisocyanate is not particularly limited, examples thereof include alkyl carboxylic acid salts of tin, lead, zinc, bismuth, zirconium, zirconyl and the like; organotin compounds such as tin 2-ethylhexanoate and dibutyltin dilaurate; organolead compounds such as lead 2-ethylhexanoate and the like; organozinc compounds such as zinc 2-ethylhexanoate and the like; bismuth 2-ethylhexanoate, zirconium 2-ethylhexanoate, and zirconyl 2-ethylhexanoate. Any one of these catalysts can be used alone, or two or more types thereof can be used in combination.

Further, the isocyanurate-forming reaction catalyst described above can also be used as an allophanate-forming reaction catalyst. When the allophanate-forming reaction is carried out using the isocyanurate-forming reaction catalyst described above, not surprisingly, an isocyanurate group-containing polyisocyanate is also produced. From the standpoint of economic production, it is preferable to carry out the allophanate-forming reaction and the isocyanurate-forming reaction by using the isocyanurate-forming reaction catalyst described above as the allophanate-forming reaction catalyst.

The blending amount of the allophanate-forming reaction catalyst described above is preferably 10 ppm by mass or more and 1,000 ppm by mass or less with respect to the mass of the charged diisocyanate. The lower limit value thereof is more preferably 20 ppm by mass, still more preferably 40 ppm by mass, and even more preferably 80 ppm by mass. The upper limit value thereof is more preferably 800 ppm by mass, still more preferably 600 ppm by mass, and even more preferably 500 ppm by mass or less.

The blending amount of the allophanate-forming reaction catalyst described above is, for example, 20 ppm by mass or more and 800 ppm by mass or less, 40 ppm by mass or more and 600 ppm by mass or less, or 80 ppm by mass or more and 500 ppm by mass or less with respect to the mass of the charged diisocyanate.

Further, the allophanate-forming reaction temperature is preferably 40°C or higher and 180°C or lower. The lower limit value thereof is more preferably 60°C, still more preferably 80°C, and even more preferably 100°C. The upper limit value thereof is more preferably 160°C, and still more preferably 140°C.

When the allophanate-forming reaction temperature is equal to or higher than the above lower limit value, it tends to be possible to maintain a higher reaction rate. When the allophanate-forming reaction temperature is equal to or lower than the above upper limit value, there is a tendency that coloration or the like of the polyisocyanate can be suppressed more effectively.

The allophanate-forming reaction temperature is, for example, 80°C or higher and 160°C or lower, or 100°C or higher and 140°C or lower.

The alcohol used to form the allophanate group is preferably an alcohol formed only with carbon, hydrogen and oxygen.

Specific examples of the alcohol include, but are not limited to, monoalcohols, polyols, and mixtures of these alcohols.

Specific examples of the monoalcohol include ethanol, 1-propanol, 2-propanol, 1-butanol, 2-methyl-1-propanol, 2-butanol, 1-pentanol, 3-methyl-1-butanol, 2-methyl-1-butanol, 2,2-dimethyl-1-propanol, 2-pentanol, 3-methyl-2-butanol, 3-pentanol, 2-methyl-2-butanol, 1-hexanol, 2-methyl-1-pentanol, 3-methyl-1-pentanol, 4-methyl-1-pentanol, 2,2-dimethyl-1-butanol, 2-ethyl-1-butanol, 2-hexanol, 3-hexanol, 3-methyl-2-pentanol, 4-methyl-2-pentanol, 2-methyl-3-pentanol, 3,3-dimethyl-2-butanol, 1-heptanol, 2-heptanol, 3-heptanol, 4-heptanol, 1-octanol, 6-methyl-1-heptanol, and 2-ethylhexanol. Any one of these monoalcohols may be used alone, or two or more types thereof may be used in combination.

Specific examples of the polyol include dialcohols such as ethylene glycol, 1,3-butanediol, neopentyl glycol, and 2-ethylhexanediol.

Further, it is also possible to derive a polyisocyanate having an allophanate group from the alcohol described in the Claims as a raw material.

[Method for producing polyisocyanate containing uretdione group]

Although the catalyst for deriving a polyisocyanate having a uretdione group is not particularly limited, specific examples thereof include trialkylphosphines such as tri-n-butylphosphine and tri-n-octylphosphine, tris(dialkylamino)phosphines such as tris-(dimethylamino)-phosphine and the like, and tertiary phosphines such as cycloalkylphosphines including cyclohexyl-di-n-hexylphosphine. These compounds can also be used as an allophanate-forming reaction catalyst. Further, many of these compounds also promote an isocyanurate-forming reaction at the same time to produce an isocyanurate group-containing polyisocyanate, such as isocyanurate trimers, in addition to the uretdione group-containing polyisocyanate such as uretdione dimers.

Moreover, the polyisocyanate having a uretdione group can also be obtained by heating without using a uretdione-forming reaction catalyst. The uretdione group-containing polyisocyanate, such as uretdione dimers, contained in the polyisocyanate composition of the present embodiment is preferably produced by heating in view of storage stability.

Furthermore, a different polyisocyanate composed of dimers or higher oligomers of diisocyanate may be added to the aforementioned polyisocyanate in an arbitrary ratio. The binding group that constitutes this different polyisocyanate is not particularly limited as long as a biuret group is contained in the finally produced polyisocyanate composition.

[Method for producing other polyisocyanates]

Furthermore, the generated polyisocyanate compound described above may be modified with a polymer polyol. A polymer polyol is a compound having one or more hydroxyl groups, and examples thereof include long-chain polyols, and more specifically, polyester polyols, polycarbonate polyols, polyether polyols, acrylic polyols and copolyols thereof can be mentioned. These long-chain polyols may be used alone or by mixing two or more of them. The polyisocyanate may be further modified with an alcohol having one or more hydroxyl groups. An alcohol is a compound having one or more hydroxyl groups, and examples thereof include short-chain polyols and long-chain polyols. Specific examples of the short-chain polyol include 1,2-propylene glycol, 1,3-butylene glycol, neopentyl glycol, hydroxypivalic acid esters of neopentyl glycol, 2-methyl-1,3-propanediol, 2,3,5-trimethylpentanediol, ethylene glycol, diethylene glycol, 1,3-propanediol, 1,4-butylenediol, 1,5-pentanediol, 1,6-hexanediol, trimethylolpropane, glycerin, 1,1,7-trimethylolheptane and 1,2,7-trimethylolheptane. Further, examples of the long-chain polyol include polyester polyols, polycarbonate polyols, polyether polyols, acrylic polyols and copolyols thereof. These polyols may be used alone or by mixing two or more of them.

«Alcohol»

The hydrophilic polyisocyanate is obtained by reaction with an alcohol having an average number of hydroxyl groups per molecule of 2.0 or more and 3.5 or less and a number average molecular weight of 450 or less, from the viewpoints of improving acid resistance, alkali resistance and salt spray resistance, and suppressing viscosity reduction and dilution turbidity.

The lower limit value of the average number of hydroxyl groups of the alcohol used in the present embodiment is preferably 2.0 or more and 3.0 or less, and more preferably 2.0 or more and 2.5 or less from the viewpoints of suppressing viscosity reduction and dilution turbidity and achieving a good balance between improvements in acid resistance, alkali resistance and salt spray resistance. In addition, the number average molecular weight is preferably 400 or less, and more preferably 350 or less, from the viewpoint of suppressing viscosity reduction, and in view of dispersibility and coating film hardness.

Examples of the alcohol that satisfies the average number of hydroxyl groups and the number average molecular weight described above include diols, triols, and tetraols. Examples of the diols include ethylene glycol, diethylene glycol, triethylene glycol, propylene glycol, dipropylene glycol, tripropylene glycol, 1,2-propanediol, 1,3-propanediol, 1,2-butanediol, 1,3 -butanediol, 1,4-butanediol, 2,3-butanediol, 2-methyl-1,2-propanediol, 1,5-pentanediol, 1,2-pentanediol, 1,3-pentanediol, 1,4-pentanediol, neopentyl glycol, 2-methyl-2,3-butanediol, 1,6-hexanediol, 1,2-hexanediol, 2,5-hexanediol, 2-methyl-2,4-pentanediol, 2,3-dimethyl-2,3-butanediol, 3-methyl-1,5-pentanediol, 2-ethyl-hexanediol, 1,2-octanediol, 2-methyl-1,8- octanediol, 1,9-nonanediol, 1,10-decanediol, 1,2-decanediol, 2,2,4-trimethylpentanediol, 2-butyl-2-ethyl-1,3-propanediol, and 2,2-diethyl-1,3-propanediol; examples of the triols include glycerin and trimethylolpropane; and examples of the tetraols include pentaerythritol and the like.

Examples of the polymer alcohol include polyester polyols, polyether polyols, acrylic polyols, polyolefin polyols, and polycarbonate diols.

Examples of the polyester polyol include a polyester polyol obtained by a condensation reaction of a single compound or a mixture of a dibasic acid selected from the group of carboxylic acids such as succinic acid, adipic acid, sebacic acid, dimer acid, maleic anhydride, phthalic anhydride, isophthalic acid, and terephthalic acid, with a single compound or a mixture of a polyhydric alcohol selected from the group consisting of ethylene glycol, propylene glycol, diethylene glycol, neopentyl glycol, trimethylolpropane, glycerin, and the like; and, for example, a polycaprolactone or the like obtained by ring-opening polymerization of ε-caprolactone using a polyhydric alcohol.

Examples of the polyether polyol include a polyether polyol obtained by random addition or block addition of a single compound or a mixture of an alkylene oxide, such as ethylene oxide, propylene oxide, butylene oxide, cyclohexene oxide and styrene oxide, to a single compound or a mixture of a polyvalent hydroxy compound, by using a strongly basic catalyst such as a hydroxide, an alcoholate and an alkylamine of, for example, lithium, sodium, potassium or the like, a composite metal cyanide complex such as a metalloporphyrin and a zinc hexacyanocobaltate complex, or the like; a polyether polyol obtained by reacting an alkylene oxide with a polyamine compound such as ethylenediamines; and a so-called polymer polyol obtained by polymerizing an acrylamide or the like using these polyethers as a medium.

A polycarbonate diol repeatedly has a structural unit, which is obtained by dehydration condensation of two alcohol groups and a single carbonate group. Further, examples of the polycarbonate diol include those obtained by copolymerization of a first diol having 2 or more and 20 or less carbon atoms, a second diol having 2 or more and 20 or less carbon atoms (hereinafter also simply referred to as "two types of diols") and a carbonate compound.

Any one of these alcohols may be used alone, or a plurality of these alcohols may be used in combination.

The mass fraction of the alcohol in the polyisocyanate composition of the present embodiment is preferably 0.01% by mass or more and 4.5% by mass or less. Further, it is more preferably 0.1% by mass or more and 2.5% by mass or less from the viewpoint of achieving a good balance among the dilution turbidity and the chromaticity, acid resistance and salt spray resistance of the polyisocyanate composition.

<<Anionic compound>>

In the hydrophilic polyisocyanate, a portion of the isocyanate groups of the polyisocyanate is modified with an anionic compound. That is, an anionic group derived from an anionic compound may be introduced into a portion of the isocyanate groups of the polyisocyanate contained in the polyisocyanate composition of the present embodiment. A polyisocyanate into which this anionic group is introduced is called a hydrophilic polyisocyanate.

The anionic compound is not particularly limited as long as it is a compound having an anionic group, but examples thereof include a compound containing a carboxylic acid group, a compound containing a phosphoric acid group, and a compound containing a sulfonic acid group. Further, in order to react with one isocyanate group, it is preferable to have one or more active hydrogen groups per molecule of the hydrophilic compound for reacting with the isocyanate group included in the polyisocyanate. Specific examples of the active hydrogen group include a hydroxyl group, a mercapto group, a carboxylic acid group, an amino group and a thiol group.

The anionic compound containing an active hydrogen group is not particularly limited, but examples thereof include a compound containing a carboxylic acid group, a compound containing a phosphoric acid group, and a compound containing a sulfonic acid group.

The compound containing a carboxylic acid group is not particularly limited, but examples thereof include a carboxylic acid containing a hydroxyl group including: a monohydroxycarboxylic acid such as 1-hydroxyacetic acid, 3-hydroxypropanoic acid, 12-hydroxy-9-octadecanoic acid, hydroxypivalic acid, and lactic acid; and a polyhydroxycarboxylic acid such as dimethylolacetic acid, 2,2-dimethylolbutyric acid, 2,2-dimethylolpentanoic acid, dihydroxysuccinic acid, and dimethylolpropionic acid. Among them, hydroxypivalic acid or dimethylolpropionic acid is preferred.

The compound containing a phosphoric acid group is not particularly limited, but examples thereof include an acidic phosphoric acid ester, an acidic phosphorous acid ester, an acidic hypophosphorous acid ester, and a specific polyether phosphonate (such as those commercially available from Solvay Nicca, Ltd., under the product name of RHODAFAC (registered trademark)). Among these, an acidic phosphoric acid ester is preferred.

From the viewpoint of water dispersibility, in the polyisocyanate composition, the content of phosphorus atoms is preferably 0.03% by mass or more, more preferably 0.05% by mass or more, and still more preferably 0.1% by mass or more with respect to the total amount (100% by mass) of the polyisocyanate composition. When the content of

phosphorus atoms is equal to or more than the above lower limit value, the water dispersibility tends to be better due to the lowered interfacial tension.

In addition, in the polyisocyanate composition, the content of phosphorus atoms is preferably 6.0% by mass or less, more preferably 3.0% by mass or less, and still more preferably 1.0% by mass or less with respect to the total mass (100% by mass) of the polyisocyanate composition, from the viewpoint of the physical properties of the coating film. When the content of phosphorus atoms is equal to or less than the above upper limit value, the physical properties of the coating film tend to be better due to the increased number of isocyanate groups used for crosslinking.

The above upper limit value and lower limit value of the phosphorus content can be arbitrarily combined.

As examples of combinations, the content of phosphorus atoms with respect to the total amount (100% by mass) of the polyisocyanate composition is preferably 0.03% by mass or more and 6.0% by mass or less, more preferably 0.05% by mass or more and 3.0% by mass or less, and still more preferably 0.1% by mass or more and 1.0% by mass or less.

Although the method for controlling the content of phosphorus atoms within the above range is not limited to the following method, examples thereof include a method for adjusting the blending ratio of the above compound containing a phosphoric acid group and the polyisocyanate as a raw material. Further, the content of phosphorus atoms is measured by inductively coupled plasma atomic emission spectrometry (ICP-AES).

(Sulfonic acid having active hydrogen group)

The anionic compound is preferably one or more sulfonic acids selected from the group consisting of a sulfonic acid containing a hydroxyl group and a sulfonic acid containing an amino group.

In the sulfonic acid having an active hydrogen group used for the polyisocyanate containing a sulfonic acid anion group in the molecule, examples of the active hydrogen group include an amino group, a carboxy group, and a hydroxyl group. Among them, the active hydrogen group is preferably at least one selected from the group consisting of an amino group and a hydroxyl group.

(Sulfonic acid (1))

In the case where the active hydrogen group is a hydroxyl group, examples of the sulfonic acid having a hydroxyl group include a compound represented by the following general formula (1) (hereinafter abbreviated as "sulfonic acid (1)").
[Chemical Formula 9]

$$HO - R^{11} - SO_3H \qquad (1)$$

In the above general formula (1), $R^{11}$ is a hydrocarbon group having 1 to 10 carbon atoms which may contain at least one member selected from the group consisting of a hydroxyl group, an ether bond, an ester bond, a carbonyl group, and an imino group. $R^{11}$ may contain a ring structure. The ring structure is an aromatic ring, a 5-membered or 6-membered ring containing two nitrogen atoms, or a 5-membered or 6-membered ring containing a nitrogen atom and an oxygen atom.

$- R^{11}$

In the general formula (1), $R^{11}$ is a hydrocarbon group having 1 to 10 carbon atoms which may contain at least one member selected from the group consisting of a hydroxyl group, an ester bond (-COO-), an ether bond (-O-), a carbonyl group (-C(=O)-), an imino group (-NR-), and a ring structure.

The hydrocarbon group having 1 to 10 carbon atoms may be a divalent aliphatic hydrocarbon group having 1 to 10 carbon atoms, or a divalent aromatic hydrocarbon group having 6 to 10 carbon atoms. The divalent aliphatic hydrocarbon group having 1 to 10 carbon atoms is preferably a chain alkylene group having 1 to 6 carbon atoms. In the case of a chain alkylene group having 1 to 6 carbon atoms, it may be a group containing a ring structure as a portion of the chain alkylene group. The alkylene group having 1 to 6 carbon atoms may be linear or branched.

Among them, $R^{11}$ is preferably a chain alkylene group having 1 to 6 carbon atoms, a divalent aromatic hydrocarbon group having 6 to 10 carbon atoms (arylene group), a divalent alkylene group having 1 to 6 carbon atoms and containing an aromatic ring, a divalent alkylene group having 1 to 6 carbon atoms and containing a 5-membered or 6-membered ring containing two nitrogen atoms, or a divalent alkylene group having 1 to 6 carbon atoms and containing a 5-membered or 6-membered ring containing a nitrogen atom and an oxygen atom.

Preferred examples of the sulfonic acid (1) include 2-hydroxyethanesulfonic acid, 3-hydroxypropanesulfonic acid, 4-hydroxybutanesulfonic acid, 5-hydroxypentanesulfonic acid, 6-hydroxyhexanesulfonic acid, hydroxybenzenesulfonic acid, hydroxy(methyl)benzenesulfonic acid, 4-(2-hydroxyethyl)-1-piperazineethanesulfonic acid, 4-(2-hydroxyethyl)-1-piperazinepropanesulfonic acid, and 2-hydroxy-3-morpholinopropanesulfonic acid.

It should be noted that these compounds are merely a part of the preferred sulfonic acid (1), and the preferred sulfonic acid (1) is not limited to these.

In addition, any one of these sulfonic acids (1) may be used alone, or two or more types thereof may be used in combination.

Among them, the sulfonic acid having a hydroxyl group is preferably at least one member selected from the group consisting of 2-hydroxyethanesulfonic acid, 3-hydroxypropanesulfonic acid, hydroxybenzenesulfonic acid and hydroxy(methyl)benzenesulfonic acid.

It should be noted that in the case where the polyisocyanate composition of the present embodiment contains two or more amine salts of sulfonic acids, the sulfonic acids (1) may be the same as or different from each other.

Further, the sulfonic acid used for the polyisocyanate containing a sulfonic acid anion group in the molecule may form a salt with an amine compound described later.

(Sulfonic acid (2))

In the case where the active hydrogen group is an amino group, examples of the sulfonic acid having an amino group include a compound represented by the following general formula (2) (hereinafter abbreviated as "sulfonic acid (2)").

[Chemical Formula 10]

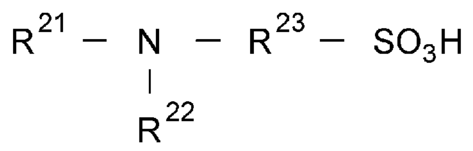

(2)

In the above general formula (2), $R^{21}$ and $R^{23}$ each independently represent a hydrogen atom or a hydrocarbon group having 1 to 12 carbon atoms which may contain a hydroxyl group. At least one of $R^{21}$ and $R^{23}$ is a hydrogen atom. $R^{22}$ is a hydrocarbon group having 1 to 12 carbon atoms which may contain a hydroxyl group.

- $R^{21}$ and $R^{23}$

In the general formula (2), $R^{21}$ and $R^{23}$ each independently represent a hydrogen atom or a hydrocarbon group having 1 to 12 carbon atoms which may contain a hydroxyl group. $R^{21}$ and $R^{23}$ may be the same as or different from each other. At least one of $R^{21}$ and $R^{23}$ is a hydrogen atom. That is, in the case where $R^{21}$ is a hydrocarbon group having 1 to 12 carbon atoms which may contain a hydroxyl group, $R^{23}$ is a hydrogen atom. Further, in the case where $R^{23}$ is a hydrocarbon group having 1 to 12 carbon atoms which may contain a hydroxyl group, $R^{21}$ is a hydrogen atom. In addition, both $R^{21}$ and $R^{23}$ may be hydrogen atoms.

The hydrocarbon group having 1 to 12 carbon atoms may be a monovalent aliphatic hydrocarbon group having 1 to 12 carbon atoms, or a monovalent aromatic hydrocarbon group having 6 to 12 carbon atoms. The monovalent aliphatic hydrocarbon group having 1 to 12 carbon atoms is preferably a chain alkyl group having 1 to 6 carbon atoms or a cyclic alkyl group having 3 to 6 carbon atoms. The chain alkyl group having 1 to 6 carbon atoms may be linear or branched.

Among them, $R^{21}$ and $R^{23}$ each preferably represent a hydrogen atom, a chain alkyl group having 1 to 6 carbon atoms, or a cyclic alkyl group having 3 to 6 carbon atoms.

$R^{22}$

$R^{22}$ is a hydrocarbon group having 1 to 12 carbon atoms which may contain a hydroxyl group.

The hydrocarbon group having 1 to 12 carbon atoms may be a divalent aliphatic hydrocarbon group having 1 to 12 carbon atoms, or a divalent aromatic hydrocarbon group having 6 to 12 carbon atoms. The divalent aliphatic hydrocarbon group having 1 to 12 carbon atoms is preferably a chain alkylene group having 1 to 12 carbon atoms. The chain alkyl group having 1 to 12 carbon atoms may be linear or branched.

Among them, $R^{22}$ is preferably a divalent chain alkylene group having 1 to 6 carbon atoms or a divalent aromatic hydrocarbon group having 6 to 10 carbon atoms (arylene group).

Preferred examples of the sulfonic acid (2) include 2-aminoethanesulfonic acid, 3-aminopropanesulfonic acid, 2-methylaminoethanesulfonic acid, 3-methylaminopropanesulfonic acid, 2-cyclohexylaminoethanesulfonic acid, 3-cyclohexylaminopropanesulfonic acid, 3-cyclohexylaminoisobutylsulfonic acid, 4-cyclohexylaminobutanesulfonic acid, 2-cyclohexylmethylaminoethanesulfonic acid, 3-cyclohexylmethylaminopropanesulfonic acid, 3-cyclohexylmethylaminoisobutylsulfonic acid, 4-cyclohexylmethylaminobutanesulfonic acid, 2-methylcyclohexylaminoethanesulfonic acid, 3-methylcyclohexylaminopropanesulfonic acid, 3-methylcyclohexylaminoisobutylsulfonic acid, 4-methylcyclohexylaminobutanesulfonic acid, 2-dimethylcyclohexylaminoethanesulfonic acid, 3-dimethylcyclohexylaminopropanesulfonic acid, 3-dimethylcyclohexylaminoisobutylsulfonic acid, 4-dimethylcyclohexylaminobutanesulfonic acid, 2-trimethylcyclohexylaminoethanesulfonic acid, 3-trimethylcyclohexylaminopropanesulfonic acid, 3-trimethylcyclohexylaminoisobutylsulfonic acid, 4-trimethylcyclohexylaminobutanesulfonic acid, 2-aminobenzenesulfonic acid, 3-aminobenzenesulfonic acid, 4-aminobenzenesulfonic acid, 2-(methylamino)benzenesulfonic acid, 3-(methylamino)benzenesulfonic acid, 4-(methylamino)benzenesulfonic acid, amino-methylbenzenesulfonic acid, aminodimethylbenzene sulfonic acid, and aminonaphthalenesulfonic acid.

It should be noted that these compounds are merely a part of the preferred sulfonic acid (2), and the preferred sulfonic acid (2) is not limited to these.

In addition, any one of these sulfonic acids (2) may be used alone, or two or more types thereof may be used in combination.

Among them, the sulfonic acid having an amino group is preferably at least one member selected from the group consisting of 2-cyclohexylaminoethanesulfonic acid, 3-cyclohexylaminopropanesulfonic acid, 4-cyclohexylaminobutanesulfonic acid, 3-cyclohexylmethylaminopropanesulfonic acid, 3-(p-methylcyclohexylamino)propanesulfonic acid, 3-(3,3,5-trimethylcyclohexylamino)propanesulfonic acid, 4-(p-methylcyclohexylamino)butanesulfonic acid, 2-aminobenzenesulfonic acid, 2-amino-5-methylbenzenesulfonic acid, 2-amino-3,5-dimethylbenzenesulfonic acid, 5-amino-2-methylbenzenesulfonic acid (4-aminotoluene-2-sulfonic acid), 4-amino-2-methylbenzenesulfonic acid (5-aminotoluene-2-sulfonic acid), and 2-aminonaphthalene-4-sulfonic acid.

The acidic group such as a carboxylic acid group, a phosphoric acid group, and a sulfonic acid group of the anionic compound containing an active hydrogen group is preferably neutralized, for example, with a cationic compound such as an inorganic base and an organic amine compound.

Examples of the inorganic base include alkali metals such as lithium, sodium, potassium, rubidium and cesium; alkaline earth metals such as magnesium, calcium, strontium and barium; metals such as manganese, iron, cobalt, nickel, copper, zinc, silver, cadmium, lead, and aluminum; and ammonia.

Examples of the organic amine compound include linear tertiary amines such as trimethylamine, triethylamine, tripropylamine, tributylamine, trioctylamine, trilaurylamine, tritridecylamine, and tristearylamine; branched tertiary amines such as triisopropylamine, triisobutylamine, tri-2-ethylhexylamine and tri-branched tridecylamine; tertiary amines having a mixed hydrocarbon group, such as N,N-dimethylethylamine, N,N-dimethylpropylamine, N,N-dimethylisopropylamine, N,N-dimethylbutylamine, N,N-dimethylisobutylamine, N,N-dimethyloctylamine, N,N-dimethyl-2-ethylhexylamine, N,N-dimethyllaurylamine, N,N-dimethyl (branched) tridecylamine, N,N-dimethylstearylamine, N,N-diethylbutylamine, N,N-diethylhexylamine, N,N-diethyloctylamine, N,N-diethyl-2-ethylhexylamine, N,N-diethyllaurylamine, N,N-diisopropylmethylamine, N,N-diisopropylethylamine, N,N-diisopropylbutylamine, and N,N-diisopropyl-2-ethylhexylamine; alicyclic tertiary amines such as N,N-dimethylcyclohexylamine, N,N-diethylbenzylamine, N,N-diethylcyclohexylamine, N,N-dicyclohexylmethylamine, N,N-dicyclohexylethylamine, and tricyclohexylamine; tertiary amines having an aromatic ring substituent, such as N,N-dimethylbenzylamine, N,N-diethylbenzylamine, N,N-dibenzylmethylamine, tribenzylamine, N,N-dimethyl-4-methylbenzylamine, N,N-dimethylphenylamine, N,N-diethylphenylamine, and N,N-diphenylmethylamine; and cyclic amines such as N-methylpyrrolidine, N-ethylpyrrolidine, N-propylpyrrolidine, N-butylpyrrolidine, N-methylpiperidine, N-ethylpiperidine, N-propylpiperidine, N-butylpiperidine, N-methylmorpholine, N-ethylmorpholine, N-propylmorpholine, N-butylmorpholine, N-sec-butylmorpholine, N-tert-butylmorpholine, N-isobutylmorpholine, and quinuclidine. Any one of these organic amine compounds may be used alone, or two or more types thereof may be used in combination.

Among them, tertiary amines having 5 to 30 carbon atoms are preferred, and specific examples thereof include triethylamine, tripropylamine, tributylamine, trioctylamine, trilaurylamine, tridecylamine, triisopropylamine, triisobutylamine, tri-2-ethylhexylamine, tri-branched tridecylamine, N,N-dimethylpropylamine, N,N-dimethylisopropylamine, N,N-dimethylbutylamine, N,N-dimethylisobutylamine, N,N-dimethyloctylamine, N,N-dimethyl-2-ethylhexylamine, N,N-dimethyllaurylamine, N,N-dimethyl (branched) tridecylamine, N,N-dimethylstearylamine, N,N-diethylbutylamine, N,N-diethylhexylamine, N,N-diethyloctylamine, N,N-diethyl-2-ethylhexylamine, N,N-diethyllaurylamine, N,N-diisopropylmethylamine, N,N-diisopropylethylamine, N,N-dimethylcyclohexylamine, N,N-diethylcyclohexylamine, N,N-dicyclohexylmethylamine, N,N-dicyclohexylethylamine, N,N-dimethylbenzylamine, N,N-diethylbenzylamine, N,N-dibenzylmethylamine, tribenzylamine, N,N-dimethylphenylamine, N,N-diethylphenylamine, N,N-diphenylmethylamine, N-methylpiperidine, N-ethylpiperidine, N-methylmorpholine, N-ethylmorpholine, quinuclidine, pyridine, and quinoline. Any one of these preferred organic amine compounds may be used alone, or two or more types thereof may be used in combination.

It should be noted that in the case where the polyisocyanate composition of the present embodiment contains two or more amine salts of sulfonic acids, the sulfonic acids (2) may be the same as or different from each other.

In order to disperse the polyisocyanate in water, it is modified with an anionic compound containing an active hydrogen group (a hydrophilic group derived from a hydrophilic compound is introduced into the polyisocyanate), but by controlling the modification rate so as not be too high, it tends to be possible to suppress the deterioration of the coating film physical properties (hardness, water resistance and solvent resistance). That is, since the anionic compound containing an active hydrogen group has high emulsifying capacity, a high emulsifying effect can be obtained with a small amount.

In the polyisocyanate composition of the present embodiment, the mass fraction of the anionic compound containing an active hydrogen group that is bonded to the above polyisocyanate compound is 0.1% by mass or more and 13.0% by mass or less with respect to the total mass (100% by mass) of the polyisocyanate composition. Further, from the viewpoints of viscosity change at the time of blending, acid resistance, and salt spray resistance, it is preferably 0.1% by mass or more and 9.0% by mass or less, and more preferably 0.5% by mass or more and 6.0% by mass or less.

<Method for producing polyisocyanate composition>

Examples of the method for producing the polyisocyanate composition of the present embodiment include the following methods (1) to (3).

(1) A method of collectively reacting a polyisocyanate with an alcohol and an anionic compound containing an active hydrogen group.
(2) A method of reacting a polyisocyanate (A) with an alcohol and an anionic compound containing an active hydrogen group, and then mixing another polyisocyanate (B).
(3) A method of separately producing a reaction product (C) of a polyisocyanate and an alcohol and a reaction product (D) of a polyisocyanate and an anionic compound containing an active hydrogen group, and mixing the reaction product (C) and the reaction product (D) at the desired mass ratio.

Among the above methods (1) to (3), the method (1) or (2) is preferred in view of achieving a good balance between shortening of the production process and production time and stability of the physical properties of the obtained polyisocyanate composition, and the method (2) is more preferred in view of dilution turbidity and alkali resistance.

Furthermore, it is more preferred that an acidic group of the anionic compound containing an active hydrogen group is neutralized with a cationic compound to form a neutralized salt in advance, and then the neutralized salt, a polyisocyanate and an alcohol are reacted, from the viewpoint of suppressing dilution turbidity and low-temperature turbidity.

When producing by the above method (2), a ratio [(WA)/(WB)] of the mass of the polyisocyanate (WA) and the mass of the hydrophilic polyisocyanate (WB) is preferably in the range of 99/1 to 50/50.

For the reaction between the polyisocyanate, the alcohol and the anionic compound containing an active hydrogen group, an organic metal salt, a tertiary amine-based compound, or an alkali metal alcoholate may be used as a catalyst. Examples of the alkali metals include sodium and the like. Examples of the metal constituting the organic metal salt include tin, zinc, and lead. Examples of the alkali metal include sodium and the like.

The reaction temperature between the polyisocyanate, the alcohol, and the anionic compound containing an active hydrogen group is preferably -20°C or higher and 150°C or lower, and more preferably 30°C or higher and 130°C or lower. When the reaction temperature is equal to or higher than the above lower limit value, the reactivity tends to be higher. Further, when the reaction temperature is equal to or lower than the above upper limit value, side reactions tend to be suppressed more effectively.

It is preferable to completely react the alcohol and the anionic compound containing an active hydrogen group with the polyisocyanate so that they do not remain in an unreacted state. When they do not remain in an unreacted state, the water dispersibility of the polyisocyanate composition and the pot life when formed into a coating material composition tend to be improved.

When the anionic compound containing an active hydrogen group is a sulfonic acid having a hydroxyl group, the method for producing a polyisocyanate composition of the present embodiment preferably includes, for example, a step (A) of mixing and reacting an amine salt of a sulfonic acid having a hydroxyl group, and a polyisocyanate. Alternatively, the method for producing a polyisocyanate composition of the present embodiment preferably includes, for example, a step (B) of mixing and reacting a sulfonic acid having a hydroxyl group, a polyisocyanate, and an amine compound.

In the step (A), the amine salt of sulfonic acid is preferably adjusted in advance and then added to the polyisocyanate. Further, in the step (B), the sulfonic acid having a hydroxyl group and the amine compound may be simultaneously added, or may be sequentially added, to the polyisocyanate.

Among them, the step (A) is preferred, and the amine salt of sulfonic acid is more preferably adjusted in advance and then added to the polyisocyanate.

In this reaction step, from the viewpoints of emulsifiability and coating film physical properties, the modification

rate with the sulfonic acid or the amine salt thereof in the polyisocyanate compound is, in a molar ratio of isocyanate group/hydroxyl group or amino group, preferably in the range of 2 to 400, more preferably in the range of 5 to 200, and still more preferably in the range of 10 to 100.

The modification rate with the sulfonic acid or the amine salt thereof can be measured by liquid chromatography (LC).

In this reaction step, although the reaction temperature and the reaction time can be appropriately determined in accordance with the progress of the reaction, the reaction temperature is preferably 0°C or higher and 150°C or lower, and the reaction time is preferably 30 minutes or more and 48 hours or less.

In addition, in this reaction step, a known ordinary catalyst may be used depending on the case. Although the catalyst is not particularly limited, examples thereof include those shown in the following (a) to (f). These may be used alone or in combination.

(a) Organotin compounds such as tin octanoate, tin 2-ethyl-1-hexanoate, tin ethyl caproate, tin laurate, tin palmitate, dibutyltin oxide, dibutyltin dichloride, dibutyltin diacetate, dibutyltin dimaleate, dibutyltin dilaurate, dioctyltin diacetate, and dioctyltin dilaurate.
(b) Organozinc compounds such as zinc chloride, zinc octanoate, zinc 2-ethyl-1-hexanoate, zinc 2-ethylcaproate, zinc stearate, zinc naphthenate, and zinc acetylacetonate.
(c) Organotitanium compounds.
(d) Organozirconium compounds.
(e) Tertiary amines such as triethylamine, tributylamine, N,N-diisopropylethylamine, and N,N-dimethylethanolamine.
(f) Diamines such as triethylenediamine, tetramethylethylenediamine, and 1,4-diazabicyclo[2.2.2]octane.

A solvent may or may not be used in the method for producing a polyisocyanate composition of the present embodiment. The solvent used in the method for producing a polyisocyanate composition of the present embodiment may be a hydrophilic solvent or a hydrophobic solvent. As the hydrophilic solvent and the hydrophobic solvent, the same as those exemplified above for the other components can be mentioned.

Further, in the method for producing a polyisocyanate composition of the present embodiment, in addition to the polyisocyanate compound and the phosphorous acid ester compound, at least one member selected from the group consisting of an antioxidant, a light stabilizer, a polymerization inhibitor, and a surfactant may be further added. As the antioxidant, the light stabilizer, the polymerization inhibitor and the surfactant, the same as those exemplified above for the other components can be mentioned.

<Number average molecular weight>

The number average molecular weight of the polyisocyanate composition of the present embodiment is preferably 300 or more and 2,000 or less, more preferably 500 or more and 1,800 or less, and still more preferably 550 or more and 1,550 or less, from the viewpoint of achieving a good balance between low viscosity and coating film physical properties. A method for controlling the number average molecular weight within the above range is not particularly limited, but examples thereof include a method of adjusting conditions such as the amount of the diisocyanate added as a raw material, the reaction temperature, and the reaction time.

The number average molecular weight can be measured by, for example, gel permeation chromatography (hereinafter abbreviated as GPC).

[Viscosity of polyisocyanate composition]

The viscosity of the polyisocyanate composition of the present embodiment at 25°C is preferably 400 mPa·s or more and 20,000 mPa·s or less from the viewpoints of handleability, dispersibility, and coatability. The minimum value of the viscosity is more preferably 450 mPa s, and still more preferably 500 mPa·s, from the viewpoints of acid resistance, alkali resistance, and salt spray resistance. Further, the maximum value is more preferably 10,000 mPa s, and still more preferably 5,000 mPa s, from the viewpoint of viscosity change during blending.

The above upper limit value and lower limit value of the viscosity of the polyisocyanate composition can be arbitrarily combined.

Examples of combinations include 450 mPa’s to 10,000 mPa·s and 500 mPa·s to 5,000 mPa·s.

<Blocked polyisocyanate>

A blocked polyisocyanate contained in a blocked polyisocyanate composition of the present embodiment is a reaction product of a polyisocyanate, an alcohol, a thermally dissociable blocking agent and a hydrophilic compound.

That is, in the blocked isocyanate, an alcohol is bonded to the polyisocyanate via a urethane group, a hydrophilic compound is bonded to the polyisocyanate via a urethane group, and at least a portion of the isocyanate groups in the polyisocyanate is blocked with a blocking agent.

[Thermally dissociable blocking agent]

In the blocked polyisocyanate, at least a portion of the isocyanate groups is blocked with a thermally dissociable blocking agent. A thermally dissociable blocking agent is a compound having one active hydrogen within the molecule, and has a property of being dissociated from an isocyanate group by heating. Specific examples of the thermally dissociable blocking agent include alcohol-based compounds, alkylphenol-based compounds, phenol-based compounds, active methylene-based compounds, mercaptan-based compounds, acid amide-based compounds, acid imide-based compounds, imidazole-based compounds, urea-based compounds, oxime-based compounds, amine-based compounds, imine-based compounds, and pyrazole-based compounds.

More specific examples of the thermally dissociable blocking agent include compounds shown in (1) to (13) below. Any one of these blocking agents may be used alone, or two or more types thereof may be used in combination.

(1) Alcohol-based compounds: methanol, ethanol, 2-propanol, n-butanol, secbutanol, 2-ethyl-1-hexanol, 2-methoxyethanol, 2-ethoxyethanol, and 2-butoxyethanol.
(2) Alkylphenol-based compounds: mono- or dialkylphenols having an alkyl group of 4 or more carbon atoms as a substituent. Examples thereof include monoalkylphenols such as n-propylphenol, i-propylphenol, n-butylphenol, sec-butylphenol, t-butylphenol, n-hexylphenol, 2-ethylhexylphenol, n-octylphenol, and n-nonylphenol; and dialkylphenols such as di-n-propylphenol, diisopropylphenol, isopropylcresol, di-n-butylphenol, di-t-butylphenol, di-sec-butylphenol, di-n-octylphenol, di-2-ethylhexylphenol and di-n-nonylphenol.
(3) Phenol-based compounds: phenol, cresol, ethylphenol, styrenated phenol, hydroxybenzoic acid esters and the like.
(4) Active methylene-based compounds: dimethyl malonate, diethyl malonate, methyl acetoacetate, ethyl acetoacetate, and acetylacetone.
(5) Mercaptan-based compounds: butyl mercaptan and dodecyl mercaptan.
(6) Acid amide-based compounds: acetanilide, acetic acid amide, ε-caprolactam, δ-valerolactam, and γ-butyrolactam.
(7) Acid imide-based compounds: succinimide and maleimide.
(8) Imidazole-based compounds: imidazole and 2-methylimidazole.
(9) Urea-based compounds: urea, thiourea, and ethylene urea.
(10) Oxime-based compounds: formaldoxime, acetaldoxime, acetoxime, methyl ethyl ketoxime, and cyclohexanone oxime.
(11) Amine-based compounds: diphenylamine, aniline, carbazole, di-n-propylamine, diisopropylamine, and isopropylethylamine.
(12) Imine-based compounds: ethyleneimine and polyethyleneimine.
(13) Pyrazole-based compounds: pyrazole, 3-methylpyrazole, and 3,5-dimethylpyrazole.

Among them, the thermally dissociable blocking agent preferably contains at least one member selected from the group consisting of oxime-based compounds, pyrazole-based compounds, active methylene-based compounds, amine-based compounds and acid amide-based compounds, and is more preferably a pyrazole-based compound or an oxime-based compound from the viewpoint of storage stability when formed into a coating liquid containing an amphiphilic solvent.

<<Method for producing blocked polyisocyanate composition>>

A blocked polyisocyanate composition is not particularly limited, but can be obtained, for example, by reacting the aforementioned polyisocyanate, the aforementioned anionic compound, the aforementioned alcohol, and the aforementioned thermally dissociable blocking agent.

The reaction between the isocyanate group of the polyisocyanate and the anionic group of the anionic compound or the hydroxyl group of the alcohol and the reaction between the isocyanate group of the polyisocyanate and the thermally dissociable blocking agent can be carried out at the same time, and it is also possible to carry out either of the reactions in advance, followed by the second reaction. In particular, it is preferred that the isocyanate group is first reacted with the hydrophilic group of the anionic compound and the hydroxyl group of the alcohol to obtain a polyisocyanate having a structural unit derived from the anionic compound and the alcohol, and then reacted with the thermally dissociable blocking agent.

In the reaction step, for example, an organic metal salt of tin, zinc, lead and the like; a tertiary amine-based

compound; and an alcoholate of an alkali metal such as sodium may be used as a catalyst.

The reaction temperature in the reaction step is preferably -20°C or higher and 150°C or lower, and more preferably 30°C or higher and 100°C or lower. When the reaction temperature is equal to or higher than the above lower limit value, the reactivity tends to be higher. Further, when the reaction temperature is equal to or lower than the above upper limit value, side reactions tend to be more suppressed.

It is preferable to completely react the hydrophilic compound with the polyisocyanate so that the hydrophilic compound does not remain in an unreacted state. When they do not remain in an unreacted state, there is a tendency that the decrease in the water dispersion stability of a water dispersible blocked polyisocyanate composition is more suppressed, and that the decrease in the curability when used as a coating composition is more suppressed.

<Polyurethane resin composition>

A polyurethane resin composition of the present embodiment contains the polyisocyanate composition described above. The above polyurethane resin composition may further contain a polyol, which will be described later, as an active hydrogen compound.

<Coating composition>

A coating composition of the present embodiment contains the polyisocyanate composition described above. The above coating composition preferably further contains a resin dispersed or emulsified in water.

Although the polyisocyanate composition described above can be mixed with an organic solvent and optionally a resin and used as an organic solvent-based coating composition, it is preferably mixed with a resin dispersed or emulsified in water and used as a coating composition.

Since the coating composition of the present embodiment contains the polyisocyanate composition described above, the pot life is favorable, and the drying property, gloss, hardness, water resistance and salt spray resistance when formed into a coating film are excellent.

In particular, the coating composition of the present embodiment can also be used as coating materials for buildings, coating materials for automobiles, coating materials for automobile repair, coating materials for plastic, pressure-sensitive adhesives, adhesives, building materials, household aqueous coating materials, other coating agents, sealing agents, inks, casting materials, elastomers, foams, plastic raw materials, and fiber treatment agents.

Next, each component contained in the coating composition of the present embodiment will be described below in detail.

(Resin)

In the above coating composition, a resin used as a main agent component may be any resin as long as it can be dispersed or emulsified in water, but an active hydrogen compound (polyvalent active hydrogen compound) is preferred.

The active hydrogen compound is a compound in which two or more active hydrogens are bound within a molecule. Examples of the active hydrogen compound include polyols, polyamines, and polythiols, and polyols are often used.

Although such active hydrogen compounds are not particularly limited, specific examples thereof include acrylic resins, polyester resins, polyether resins, epoxy resins, fluororesins, polyurethane resins, polyvinylidene chloride copolymers, polyvinyl chloride copolymers, vinyl acetate copolymers, acrylonitrile butadiene copolymers, polybutadiene copolymers, and styrene butadiene copolymers.

Among them, acrylic resins or polyester resins are preferred as the active hydrogen compound.

For example, the hydroxyl value of the polyol is preferably 50 mgKOH/g or more and 250 mgKOH/g or less as the hydroxyl value in the resin component in view of water resistance and salt spray resistance.

[Acrylic resins]

Although the acrylic resins are not particularly limited, examples thereof include acrylic resins obtained by polymerizing a single or a mixture of polymerizable monomers selected from the monomers shown in the following (a) to (e) and the like. These acrylic resins may be used alone or in combination.

(a) (Meth)acrylic acid esters such as methyl (meth)acrylate, ethyl (meth)acrylate, isopropyl (meth)acrylate, n-butyl (meth)acrylate, 2-ethylhexyl (meth)acrylate, and lauryl (meth)acrylate.

(b) (Meth)acrylic acid esters having an active hydrogen such as 2-hydroxyethyl (meth)acrylate, 2-hydroxypropyl

(meth)acrylate, 2-hydroxybutyl (meth)acrylate, 3-hydroxypropyl (meth)acrylate, and 4-hydroxybutyl (meth)acrylate.
(c) Unsaturated carboxylic acids such as acrylic acid, methacrylic acid, maleic acid, and itaconic acid.
(d) Unsaturated amides such as acrylamide, N-methylol acrylamide, and diacetone acrylamide.
(e) Other polymerizable monomers such as glycidyl methacrylate, styrene, vinyltoluene, vinyl acetate, acrylonitrile, dibutyl fumarate, p-styrenesulfonic acid, and allylsulfosuccinic acid.

Although emulsion polymerization is generally used as a polymerization method thereof, suspension polymerization, dispersion polymerization, and solution polymerization can also be used. In the emulsion polymerization, the polymerization can also be carried out in a stepwise manner.

[Polyester resins]

Although the polyester resins are not particularly limited, examples thereof include polyester resins obtained by a condensation reaction of a carboxylic acid alone or a mixture thereof with a polyhydric alcohol alone or a mixture thereof.
Examples of the carboxylic acid include succinic acid, adipic acid, sebacic acid, dimer acid, maleic anhydride, phthalic anhydride, isophthalic acid, terephthalic acid, trimellitic acid, and pyromellitic acid.
Examples of the polyhydric alcohol include diols, triols, and tetraols.
Examples of the diols include ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethyl-hexanediol, 1,2-octanediol, 1,2-decanediol, 2,2,4-trimethylpentanediol, 2-butyl-2-ethyl-1,3-propanediol, and 2,2-diethyl-1,3-propanediol.
Examples of the triols include glycerin and trimethylolpropane.
Examples of the tetraols include diglycerin, dimethylolpropane, and pentaerythritol.
Alternatively, for example, polycaprolactones obtained by ring-opening polymerization of ε-caprolactone onto a hydroxyl group of a low molecular weight polyol, and the like can also be used as the polyester resins.

[Polyether resins]

Examples of the polyether resins include those shown in the following (a) to (d), and the like.

(a) Polyether polyols obtained by adding an alkylene oxide alone, or a mixture thereof, to a polyhydric hydroxy compound alone, or a mixture thereof, using a strongly basic catalyst;
(b) polyether polyols obtained by reacting a polyamine compound with an alkylene oxide;
(c) polyether polyols obtained by ring-opening polymerization of cyclic ethers;
(d) So-called polymer polyols obtained by polymerizing an acrylamide or the like using the polyether polyols obtained in (a) to (c) as a medium.

Examples of the polyhydric hydroxy compound in (a) include those shown in the following (i) to (vi).

(i) Diglycerin, ditrimethylolpropane, pentaerythritol, dipentaerythritol or the like;
(ii) sugar alcohol-based compounds such as erythritol, D-threitol, L-arabinitol, ribitol, xylitol, sorbitol, mannitol, galactitol, and rhamnitol;
(iii) monosaccharides such as arabinose, ribose, xylose, glucose, mannose, galactose, fructose, sorbose, rhamnose, fucose, and ribodesose;
(iv) disaccharides such as trehalose, sucrose, maltose, cellobiose, gentiobiose, lactose, and melibiose;
(v) trisaccharides such as raffinose, gentianose, and melezitose;
(vi) tetrasaccharides such as stachyose, and the like.

Examples of the above strongly basic catalyst in (a) include hydroxides of alkali metals, alcoholates, and alkylamines. Examples of the alkali metals include lithium, sodium, and potassium.
Examples of the above alkylene oxide in (a) include ethylene oxide, propylene oxide, butylene oxide, cyclohexene oxide, and styrene oxide.
Examples of the above polyamine compound in (b) include ethylenediamines, and the like.
Examples of the above cyclic ethers in (c) include tetrahydrofuran and the like.
In addition, in the coating composition of the present embodiment, these resins can be used in combination with resins such as melamine-based curing agents, urethane dispersions, and urethane acrylic emulsions, if necessary.

Further, these resins are preferably emulsified, dispersed or dissolved in water. For this reason, it is possible to neutralize the carboxy groups, sulfone groups and the like contained in the resins.

Although the neutralizing agent for neutralizing the carboxy groups, sulfone groups and the like is not particularly limited, examples thereof include ammonia and water-soluble amino compounds.

Examples of the water-soluble amino compound include monoethanolamine, ethylamine, dimethylamine, diethylamine, triethylamine, propylamine, dipropylamine, isopropylamine, diisopropylamine, triethanolamine, butylamine, dibutylamine, 2-ethylhexylamine, ethylenediamine, propylenediamine, methylethanolamine, dimethylethanolamine, diethylethanolamine, and morpholine. Any one of these may be used alone, or two or more types thereof may be used in combination.

Among them, the neutralizing agent is preferably a tertiary amine, and more preferably triethylamine or dimethylethanolamine.

(Pigment)

The pigment may be an organic pigment or an inorganic pigment, and is not particularly limited.

Examples of white pigments include inorganic pigments such as zinc oxide, white lead, calcium carbonate, lithopone (mixture of zinc sulfide and barium sulfate), titanium dioxide, precipitated barium sulfate, and barytes powder; and organic pigments such as polystyrene-based copolymer particles. Examples of black pigments include carbon black, and the like. Examples of red pigments include red lead and red iron oxide. Examples of yellow pigments include chrome yellow and zinc yellow. Examples of blue pigments include ultramarine blue and phthalocyanine blue. Examples of green pigments include phthalocyanine green, and the like.

(Other components)

The coating composition of the present embodiment may contain other components in addition to the polyisocyanate composition and the resin. Although other components are not particularly limited, examples thereof include an antioxidant, a light stabilizer, a polymerization inhibitor, a surfactant, a solvent, and a dehydrating agent.

Examples of the antioxidant and the light stabilizer include those shown in the following (a) to (e), and the like. Any one of these may be contained alone, or two or more of them may be contained.

(a) Aliphatic, aromatic or alkyl group-substituted aromatic esters of phosphoric acid or phosphorous acid and hypophosphorous acid derivatives, for example, $C_{2-8}$ monoalkyl phosphates, monoalkyl phosphites, or $C_{4-16}$ dialkyl phosphates, dialkyl phosphites, or dilauryl phosphate, diphenyl phosphate, monolauryl phosphate, monophenyl phosphate, dilauryl phosphite, diphenyl phosphite, monolauryl phosphite, monophenyl phosphite, and the like, especially acidic phosphate esters such as methyl acid phosphate, ethyl acid phosphate, isopropyl acid phosphate, butyl acid phosphate, dibutyl pyrophosphate, butoxyethyl acid phosphate, 2-ethylhexyl acid phosphate, alkyl (C12, C14, C16, C18) acid phosphate, isodecyl acid phosphate, isotridecyl acid phosphate, lauryl acid phosphate, stearyl acid phosphate, oleyl acid phosphate, tetracosyl acid phosphate, ethylene glycol acid phosphate, 2-hydroxyethyl methacrylate acid phosphate, dibutyl phosphate, and bis(2-ethylhexyl) phosphate, and phosphorous acid triester compounds such as triphenyl phosphite, trisnonylphenyl phosphite, tricresyl phosphite, triethyl phosphite, tris(2-ethylhexyl) phosphite, tridecyl phosphite, trilauryl phosphite, tris(tridecyl) phosphite, trioleyl phosphite, diphenyl mono(2-ethylhexyl) phosphite, diphenyl monodecyl phosphite, diphenyl mono(tridecyl) phosphite, trilauryl trithiophosphite, diethyl hydrogen phosphite, bis(2-ethylhexyl) hydrogen phosphite, dilauryl hydrogen phosphite, dilauryl hydrogen phosphite, dioleyl hydrogen phosphite, diphenyl hydrogen phosphite, tetraphenyl dipropylene glycol diphosphite, tetra($C_{12-15}$ alkyl)-4,4-isopropylidene diphenyl diphosphite, bis(decyl) pentaerythritol diphosphite, bis(tridecyl) pentaerythritol diphosphite, tristearyl phosphite, distearyl pentaerythritol diphosphite, tris(2,4-di-tbutylphenyl) phosphite, 6-[3-(3-t-butyl-4-hydroxy5-methylphenyl)propoxy]-2,4,8,10-tetra-t-butyldibenz[d,f][1,3,2]dioxaphosphepine, methylenebis(di-t-butylphenyl) octyl phosphite, SUMILIZER-GP (name of a product manufactured by Sumitomo Chemical Co., Ltd.), ADK STAB HP10, ADK STAB PEP-8, ADK STAB PEP-36/36A, ADK STAB HP1500, ADK STAB TPP (names of products manufactured by Adeka Corporation), JP-333E (name of a product manufactured by Johoku Chemical Co., Ltd.), and IRGAFOS168 (name of a product manufactured by BASF Corporation).

(b) Phosphorus compounds such as phenylphosphonic acid, phenylphosphinic acid, diphenylphosphonic acid, polyphosphonate, dialkyl pentaerythritol diphosphite, and dialkyl bisphenol A diphosphite.

(c) Phenolic derivatives (especially hindered phenol compounds), for example, 2,6-di-t-butylphenol, 2,4-dimethyl-6-t-butylphenol, 2,6-di-t-butyl-p-cresol (BHT), 2,6-di-t-butyl-4-ethyl-phenol, 2,4,6-tri-t-butylphenol, 2,6-di-t-butyl-4-s-butylphenol, 2,6-di-t-butyl-4-hydroxymethylphenol, n-octadecyl-β-(4'-hydroxy-3'5'-di-t-butylphenyl)propionate, 3,5-di-t-butyl-4-hydroxybenzylphosphonate-diethyl ester, 2,2'-methylenebis(4-methyl-6-t-butylphenol), 2,2'-methylenebis(4-ethyl-6-t-butylphenol), 4,4'-methylenebis(2,6-di-t-butylphenol), 2,2'-methylenebis(4-methyl-6-cyclohexylphenol), triethyleneglycol-N-bis-3-(3-t-butyl-4-hydroxy-5-methylphenyl)propionate, 1,6-hexanediol bis[3-(3,5-di-t-butyl-4-hydroxyphenyl)propionate, 4,4'-di and tri-thiobis(2,6-di-t-butylphenol), 2,2-thiodiethylenebis-[3(3,5-di-t-butyl-4-hydroxyphenyl)propionate], 2,4-bis(n-octylthio)-6-(4-hydroxy-3',5'-di-t-butylanilino)-1,3,5-triazine, N,N'-hexamethylenebis-(3,5-di-t-butyl-4-hydroxyhydrocinnamide, N,N'-bis[3-(3,5-di-t-butyl-4-hydroxyphenyl)propionyl]hydrazine, calcium (3,5-di-t-butyl-4-hydroxybenzyl monoethyl phosphonate), 1,3,5-trimethyl-2,4,6-tris(3,5-di-t-butyl-4-hydroxybenzyl)benzene, tris(3,5-di-t-butyl-4-hydroxyphenyl)isocyanurate, tris(3,5-di-t-butyl-4-hydroxybenzyl)isocyanurate, 1,3,5-tris[2[3-(3,5-di-t-butyl-4-hydroxyphenyl)propionyloxy]ethyl]isocyanate, tetrakis[methylene-3-(3',5'-di-t-butyl-4-hydroxyphenyl)propionate]methane, IRGANOX (name of a product manufactured by BASF Corporation), ADK STAB (name of a product manufactured by Adeka Corporation), and the like.

(d) Compounds containing sulfur such as thioether-based compounds, dithioic acid salt-based compounds, mercaptobenzimidazole-based compounds, thiocarbanilidebased compounds, and thiodipropionic acid esters.

(e) Tin-based compounds such as tin maleate and dibutyltin monoxide.

Examples of the polymerization inhibitor include hydroquinones, phenols, cresols, catechols, and benzoquinones. Specific examples of the polymerization inhibitor include benzoquinone, p-benzoquinone, p-toluquinone, p-xyloquinone, naphthoquinone, 2,6-dichloroquinone, hydroquinone, trimethylhydroquinone, catechol, p-t-butylcatechol, 2,5-di-t-butylhydroquinone, monomethylhydroquinone, p-methoxyphenol, 2,6-di-t-butyl-p-cresol, and hydroquinone monomethyl ether. Any one of these may be contained alone, or two or more of them may be contained.

Examples of the surfactant include known anionic surfactants, cationic surfactants, and amphoteric surfactants.

In the coating composition of the present embodiment, the total content of the antioxidant, the light stabilizer, the polymerization inhibitor, and the surfactant is preferably 0% by mass or more and 10% by mass or less, more preferably 0% by mass or more and 5% by mass or less, and still more preferably 0% by mass or more and 2% by mass or less with respect to the total mass of the coating composition.

The solvent used in the coating composition of the present embodiment may be a hydrophilic solvent or a hydrophobic solvent, but is preferably a hydrophilic solvent. These solvents can be used alone or as a mixture.

Although the hydrophobic solvent is not particularly limited, examples thereof include a mineral spirit, solvent naphtha, LAWS (Low Aromatic White Spirit), HAWS (High Aromatic White Spirit), toluene, xylene, cyclohexane, esters, ketones and amides.

Examples of the esters include ethyl acetate and butyl acetate.

Examples of the ketones include acetone, methyl ethyl ketone, methyl isobutyl ketone, and cyclohexanone.

Examples of the amides include N,N-dimethylformamide and N,N-dimethylacetamide.

Although the hydrophilic solvent is not particularly limited, examples thereof include alcohols, ethers, and esters of ether alcohols.

Examples of the alcohols include methanol, ethanol, propanol, isopropanol, and 2-ethylhexanol.

Examples of the ethers include diethylene glycol dimethyl ether, diethylene glycol diethyl ether, diethylene glycol dibutyl ether, dipropylene glycol monomethyl ether (DPM), and dipropylene glycol dimethyl ether.

Examples of the esters of ether alcohols include ethylene glycol monomethyl ether acetate, ethylene glycol monoethyl ether acetate, ethylene glycol monobutyl ether acetate (BGA), diethylene glycol monoethyl ether acetate, diethylene glycol monobutyl ether acetate, propylene glycol monoethyl ether acetate (PMA), propylene glycol monomethyl ether acetate, and dipropylene glycol monomethyl ether acetate.

The content of the solvent is preferably 0% by mass or more and 90% by mass or less, more preferably 0% by mass or more and 50% by mass or less, and still more preferably 0% by mass or more and 30% by mass or less with respect to the total mass of the coating composition.

Examples of the dehydrating agent include organic alkoxy compounds: such as orthoformic acid esters including methyl orthoformate and ethyl orthoformate; dimethoxypropane and the like, monofunctional isocyanates: such as aliphatic monoisocyanates including methyl isocyanate, ethyl isocyanate, and propyl isocyanate, aromatic monoisocyanates such as Additive TI (product name) (p-toluenesulfonyl isocyanate, manufactured by Covestro AG) and the like, powdery and highly porous metal oxides or carbonized materials: such as synthetic silica, activated alumina, zeolite, activated carbon and the like, calcium compounds: such as calcined gypsum, soluble gypsum, quicklime and the like, metal alkoxides: such as aluminum isopropylate, aluminum sec-butylate, and zirconium n-butylate, ethyl silicate, vinyltrimethoxysilane and the like.

The coating composition of the present embodiment may further contain an additive that is generally added to a coating material. Examples of such an additive include silane coupling agents, titanium coupling agents, organophosphates, organic phosphites, thickening agents, leveling agents, thixotropic agents, antifoaming agents, freezing stabilizers, matting agents, crosslinking reaction catalysts (catalysts for accelerating curing), antiskinning agents, dispersing agents, wetting agents, fillers, plasticizers, lubricants, reducing agents, preservatives, antifungal agents, deodorants, anti-yellowing agents, ultraviolet absorbers, antistatic agents or electrostatic charge control agents, and antisettling agents. Any one of these additives may be contained alone, or two or more types thereof may be contained in combination.

Although the above coating composition can be produced by hand stirring, if possible at the workplace, it is preferable to use a stirrer since the blending time can be shortened and the amount of organic solvent for diluting a curing agent can be reduced. The time required for blending depends on the method of blending, but is usually from about 1 to 10 minutes.

Examples of coating methods include general methods such as spray coating, roller coating, curtain flow coating, air knife coating, gravure coating, and brush coating. Among them, spray coating is preferred.

<Coated substrate>

The present embodiment is a coated substrate coated with the above coating composition of the present embodiment.

A substrate to be coated with the coating composition is not particularly limited, and examples thereof include molded articles obtained by molding a material such as metals (steel sheets, surface-treated steel sheets, and the like), plastic, wood, films, and inorganic materials. Further, the shape of these molded articles is not particularly limited, and may be, for example, those having a small thickness such as films, sheets, and boards, or those having a large thickness such as cylinders and three-dimensional structures. Alternatively, it may be those that are hollow such as tubes and the like.

<<Intended use>>

The polyisocyanate composition of the present embodiment is suitable as a water-based two-component coating agent composition, a water-based two-component ink composition, or a water-based two-component adhesive composition used for automobiles, buses, railway vehicles, construction machinery, agricultural machinery, floors, walls and roofs of buildings, metal products, mortar and concrete products, woodwork products, plastic products, ceramic building materials such as calcium silicate boards and gypsum boards, and the like. Above all, the water-based two-component curable resin composition of the present embodiment is preferably used as a water-based two-component coating agent composition. The water-based two-component coating agent composition can be applied, for example, using general methods such as spray coating, roller coating, curtain flow coating, air knife coating, gravure coating, and brush coating. In the field of water-based two-component coating agent compositions, it is preferable to use an acrylic polyol, a polyester-based polyol or a polyurethane-based polyol as a main agent, and in the field of water-based two-component adhesive compositions, it is preferable to use an acrylic polyol or a polyurethane-based polyol as a main agent.

EXAMPLES

Hereinafter, the present invention will be described more specifically with reference to Examples and Comparative Examples, but the present invention is not limited to the following Examples as long as it does not exceed the scope thereof.

The physical properties and evaluations of the polyisocyanate compositions in Examples and Comparative Examples were measured and evaluated as follows. It should be noted that the terms "parts" and "%" refer to "parts by mass" and "% by mass", respectively, unless otherwise specified.

<Measurement method>

[Physical property 1: viscosity]

The viscosity was measured at 25°C with an E-type viscometer (manufactured by Tokimec Inc.). A standard rotor (1°34' × $R^2$4) was used. The number of revolutions is as follows.

(Number of revolutions)

100 r.p.m. (in the case of less than 128 mPa s)
50 r.p.m. (in the case of 128 mPa·s or more and less than 256 mPa s)
20 r.p.m. (in the case of 256 mPa·s or more and less than 640 mPa·s)
10 r.p.m. (in the case of 640 mPa·s or more and less than 1,280 mPa s)
5 r.p.m. (in the case of 1,280 mPa·s or more and less than 2,560 mPa s)
2.5 r.p.m. (in the case of 2,560 mPa·s or more and less than 5,120 mPa·s)

[Physical property 2: isocyanate group content (NCO%)]

Using the polyisocyanate compositions obtained in Examples and Comparative Examples as samples, the isocyanate group content was measured in accordance with the method described in JIS K7301-1995 (Testing methods for tolylene diisocyanate type prepolymers for thermosetting urethane elastomers). A more specific method for measuring the isocyanate group content (NCO%) is shown below.

(1) 1 g (W g) of a sample was collected in a 200 mL Erlenmeyer flask, and 20 mL of toluene was added to the flask to dissolve the sample. (2) After that, 20 mL of a 2.0 N di-n-butylamine/toluene solution was added to the flask, and the resulting mixture was allowed to stand for 15 minutes. (3) 70 mL of 2-propanol was added to the flask and dissolved to obtain a solution. (4) The solution obtained in the above (3) was titrated with 1 mol/L hydrochloric acid to determine a sample titer (V1 mL). (5) Even when no sample was added, the measurement was carried out in the same manner as in the above (1) to (3) to determine a blank titer (V0 mL).

From the sample titer and blank titer determined above, the isocyanate group content (NCO%) was calculated using the following formula (A).

$$\text{Isocyanate group content (\% by mass)} = (V0 - V1) \times 42/[W\ (1\ g) \times 1{,}000] \times 100 \qquad (A)$$

[Physical property 3: mass fraction of cyclic trimer, mass fraction of uretdione dimer]

The mass fraction of a cyclic trimer and the mass fraction of a uretdione dimer in the polyisocyanate composition were obtained by measuring polystyrene equivalent number average molecular weights by GPC measurement under the measurement conditions shown below.

(Measurement conditions)

Apparatus: HLC-8120GPC (product name), manufactured by Tosoh Corporation
Column: TSKgel Super H1000 (product name) × 1
TSKgel Super H2000 (product name) × 1
TSKgel Super H3000 (product name) × 1, manufactured by Tosoh Corporation
Carrier: dimethylformamide
Detection method: differential refractometer

[Physical property 4: number average molecular weight of alcohol]

Using an alcohol as a sample, the number average molecular weight of the alcohol was determined by the following formula (3). It should be noted that the hydroxyl value of the alcohol was determined in accordance with the following (Physical property 9).

$$\text{Number average molecular weight} = 2/((\text{hydroxyl value of alcohol}) \times 10^{-3}/56.11)) \qquad (3)$$

[Physical property 5: hydroxyl value of alcohol]

Using an alcohol as a sample, the hydroxyl value of the alcohol was determined in accordance with JIS K 0070:1992. More specifically, 12.5 g of acetic anhydride was diluted with 50 mL of pyridine in a measuring cylinder to prepare an acetylating reagent. Subsequently, 2.5 to 5.0 g of alcohol was precisely weighed into a 100 mL eggplant flask. After adding 5 mL of the acetylating reagent and 10 mL of toluene to the eggplant flask using a transfer pipette, a cooling tube was attached thereto, and the resulting mixture was stirred for 1 hour while heating at 100°C. 2.5 mL of distilled water was added with a transfer pipette, and the resulting mixture was further heated and stirred for 10 minutes.

After cooling the resulting mixture for 2 to 3 minutes, 12.5 mL of ethanol was added thereto, and after adding 2 to 3 drops of phenolphthalein as an indicator, titration was carried out with 0.5 mol/L ethanolic potassium hydroxide.

On the other hand, as a blank test, 5 mL of the acetylating reagent, 10 mL of toluene, and 2.5 mL of distilled water were placed in a 100 mL eggplant flask, and the resulting mixture was heated and stirred for 10 minutes, and then titrated in the same manner. Based on the results, the hydroxyl value was calculated by the following formula (4).

$$\text{OH value (mg - KOH/g)} = \{(b - a) \times 28.05 \times f\}/e \qquad (4)$$

In the formula (4), a represents the titer (mL) of a sample, b represents the titer (mL) of the blank test, e represents the sample mass (g), and f represents a factor of a titrant.

<Evaluation method>

[Preparation Example 1: production of coating composition X1]

Propylene glycol diacetate (PGDA) having a water content of 1,000 ppm or less was added to and dissolved in the polyisocyanate compositions obtained in Examples 1 to 23, 25 to 30 and Comparative Examples 1 and 2 described later, so that the solid content was 70% by mass, to prepare solutions of polyisocyanate compositions. Subsequently, 60 g of an aqueous acrylic polyol dispersion (product name: Bayhydrol A2470, amount of hydroxyl groups per resin: 3.9% by mass, solid content: 45% by mass, manufactured by Covestro AG) and 20 g of deionized water were weighed into a container, and the resulting mixture was stirred at 600 rpm for 5 minutes using a propeller blade to prepare an aqueous acrylic polyol dilution. Each polyisocyanate solution was added so that the ratio (NCO/OH) of the molar amount of isocyanate groups in the polyisocyanate compositions obtained in Examples 1 to 23, 25 to 30 and Comparative Examples 1 and 2 with respect to the molar amount of hydroxyl groups in this dilution was 1.5. Furthermore, deionized water was added to adjust the viscosity to 20 seconds as measured with a Ford cup (No. 4), and the resulting mixture was stirred at 600 rpm for 10 minutes using a propeller blade to obtain each coating composition X. The viscosity change during blending, acid resistance, alkali resistance, and salt spray resistance were evaluated using the produced coating composition X1.

[Preparation Example 2: production of coating composition X2]

Preparations and evaluations were carried out in the same manner as in Preparation Example 1 with the exception that propylene glycol monomethyl ether acetate (PMA) having a water content of 1,000 ppm or less was used as a solvent for the polyisocyanate compositions obtained in Examples 31 and 32 described later.

[Preparation Example 3: production of blocked coating composition]

To the blocked polyisocyanate composition obtained in Example 24 described later, 60 g of an aqueous acrylic polyol dispersion (product name: Bayhydrol A2470, amount of hydroxyl groups per resin: 3.9% by mass, solid content: 45% by mass, manufactured by Covestro AG) and 20 g of deionized water were weighed into a container, and the resulting mixture was stirred at 600 rpm for 5 minutes using a propeller blade to prepare an aqueous acrylic polyol dilution. Each polyisocyanate solution was added so that the ratio (NCO/OH) of the molar amount of isocyanate groups in the polyisocyanate compositions obtained in Examples and Comparative Examples with respect to the molar amount of hydroxyl groups in this dilution was 1.5. Furthermore, deionized water was added to adjust the viscosity to 20 seconds as measured with a Ford cup (No. 4), and the resulting mixture was stirred at 600 rpm for 10 minutes using a propeller blade to obtain each blocked coating composition. Acid resistance, alkali resistance, and salt spray resistance were evaluated using the produced blocked coating composition.

[Preparation Example 4: production of coating composition Y]

Propylene glycol monomethyl ether acetate (PMA) having a water content of 1,000 ppm or less was added to and dissolved in the polyisocyanate compositions obtained in Examples 33 to 36, so that the solid content was 70% by mass, to prepare solutions of polyisocyanate compositions. 450 parts by mass of an aqueous acrylic polyol dispersion (product name: Bayhydrol A2470, amount of hydroxyl groups per resin: 3.9% by mass, solid content: 45% by mass, manufactured by Covestro AG) and 200 parts by mass of an aqueous polyurethane dispersion P-1 (amount of hydroxyl groups per resin: 1.8% by mass, solid content: 50% by mass), 2.0 parts by mass of an antifoaming agent B (BYK-024, manufactured by BYK-Chemie GmbH), 1.0 parts by mass of a wetting agent (BYK-346, manufactured by BYK-Chemie

GmbH) and 3.0 parts by mass of a rheological agent (B299, manufactured by Elementis PLC) were added thereto. The resulting mixture was stirred with a disper at 2,000 rpm for 30 minutes, and 60 g of the obtained mixed polyol was weighed into a container. Each polyisocyanate solution was added so that the ratio (NCO/OH) of the molar amount of isocyanate groups in the polyisocyanate compositions obtained in Examples and Comparative Examples with respect to the molar amount of hydroxyl groups in this aqueous mixed polyol dispersion was 1.5. Furthermore, deionized water was added to adjust the viscosity to 20 seconds as measured with a Ford cup (No. 4), and the resulting mixture was stirred at 600 rpm for 10 minutes using a propeller blade to obtain each coating composition Y. Flexibility, wear resistance, and weather resistance were evaluated using the produced coating composition Y.

[Preparation Example 5: production of coating composition Z]

Propylene glycol monomethyl ether acetate (PMA) having a water content of 1,000 ppm or less was added to and dissolved in the polyisocyanate compositions obtained in Examples 37 to 40, so that the solid content was 70% by mass, to prepare solutions of polyisocyanate compositions. 450 parts by mass of an aqueous acrylic polyol dispersion (product name: Bayhydrol A2470, amount of hydroxyl groups per resin: 3.9% by mass, solid content: 45% by mass, manufactured by Covestro AG) and 240 parts by mass of an aqueous polyurethane dispersion P-2 (amount of hydroxyl groups per resin: 0.0% by mass, solid content: 40% by mass), 2.0 parts by mass of an antifoaming agent B (BYK-024, manufactured by BYK-Chemie GmbH), 1.0 parts by mass of a wetting agent (BYK-346, manufactured by BYK-Chemie GmbH) and 3.0 parts by mass of a rheological agent (B299, manufactured by Elementis PLC) were added thereto. The resulting mixture was stirred with a disper at 2,000 rpm for 30 minutes, and 60 g of the obtained mixed polyol was weighed into a container. Each polyisocyanate solution was added so that the ratio (NCO/OH) of the molar amount of isocyanate groups in the polyisocyanate compositions obtained in Examples and Comparative Examples with respect to the molar amount of hydroxyl groups in this aqueous mixed polyol dispersion was 1.5. Furthermore, deionized water was added to adjust the viscosity to 20 seconds as measured with a Ford cup (No. 4), and the resulting mixture was stirred at 600 rpm for 10 minutes using a propeller blade to obtain each coating composition Z. Flexibility, wear resistance, and weather resistance were evaluated using the produced coating composition Z.

[Evaluation 1: chromaticity]

The chromaticity of the polyisocyanate compositions obtained in Examples and Comparative Examples was measured as a Hazen color number (APHA) using a PFXi-195 colorimeter manufactured by Tintometer GmbH under the registered trademark of Lovibond. The chromaticity was evaluated in accordance with the evaluation criteria shown below.

(Evaluation criteria)

A: 30 or less
B: 30 or more and 45 or less
C: 45 or more and 60 or less
D: 60 or more

[Evaluation 2: dilution turbidity]

The polyisocyanate compositions obtained in Examples and Comparative Examples were diluted with propylene glycol monomethyl ether acetate at a ratio so that the solid content was 70% to prepare diluted solutions, and the transmittance at a wavelength of 430 nm and an optical path length of 2 cm was measured using a UVmini-1240 spectrophotometer manufactured by Shimadzu Corporation.

(Evaluation criteria)

A: 96% or more
B: 93% or more
C: 90% or more and less than 93%
D: less than 90%

[Evaluation 3: viscosity change during blending]

The viscosity of the aqueous acrylic polyol dilution obtained in Preparation Example 1 was measured with an E-type viscometer as the initial viscosity. Further, the polyisocyanate solution was added thereto, and the viscosity after stirring was measured again. The ratio of the viscosity after addition of the polyisocyanate solution with respect to the viscosity before addition of the polyisocyanate solution was calculated as the viscosity change rate, and the viscosity change during blending was evaluated in accordance with the evaluation criteria shown below.

(Evaluation criteria)

A: viscosity change rate of less than 400%
B: viscosity change rate of 400% or more and less than 700%
C: viscosity change rate of 700% or more and less than 1,000%
D: viscosity change rate of 1,000% or more

[Evaluation 4: acid resistance]

On a horizontal table, the coating composition was coated on a steel plate pretreated with a sandblaster using the same method as in the above section entitled [Preparation Example 1] with an air spray (spray pressure: 0.3 MPa, spray nozzle: 1.8 mm), so as to achieve a dry film thickness of 50 ± 5 μm, and dried for 7 days in an atmosphere of 23°C and 50% relative humidity to obtain a coating film.
The above blocked coating composition was coated with an air spray and then dried by heating at 130°C for 30 minutes to obtain a coating film.
Subsequently, a steel plate provided with a coating film (hereinafter sometimes referred to as a "coated plate") was immersed in 5% aqueous sulfuric acid at 23°C for 24 hours, and the state of the coating film after removing the liquid remaining on the surface was observed. The acid resistance of the coating film was evaluated in accordance with the following evaluation criteria.

(Evaluation criteria)

A: no change in swelling after 4 days or more
B: swelling occurred in 3 days
C: swelling occurred in less than 2 days

[Evaluation 5: alkali resistance]

A coating film was obtained by curing each coating composition using the same method as in the above section entitled [Evaluation 4]. A coating film was obtained by drying in an atmosphere of 23°C and 50% relative humidity for 7 days. Subsequently, a steel plate provided with a coating film (hereinafter sometimes referred to as a "coated plate") was immersed in 5% aqueous sulfuric acid at 23°C for 24 hours, and the state of the coating film after removing the liquid remaining on the surface was observed. The alkali resistance of the coating film was evaluated in accordance with the following evaluation criteria.

(Evaluation criteria)

A: no change in swelling after 4 days or more
B: swelling occurred in 3 days
C: swelling occurred in less than 2 days

[Evaluation 6: salt spray resistance]

A solvent-based two-component urethane coating material (product name: Mightylac (white), manufactured by

Nipponpaint Co., Ltd.) was spray coated on an aluminum plate (150 mm × 75 mm × 1 mm, model number: A1050P (JIS H4000), manufactured by Testpiece Co., Ltd.) so as to achieve a dry film thickness of 50 μm. A coated plate was obtained by drying in an atmosphere of 23°C and 50% relative humidity for 14 days, and the surface was polished with No. 1000 sandpaper to produce a white plate.

A coating film was obtained by curing each coating composition using the same method as in the above section entitled [Evaluation 4]. A coated plate was obtained by drying in an atmosphere of 23°C and 50% relative humidity for 7 days. Subsequently, the obtained coated plate was cut in a straight line and tested under the following measurement conditions. After the test, the state of the coating film on the coated plate was confirmed and evaluated in accordance with the evaluation criteria shown below.

(Measurement conditions)

Apparatus: Q-FOG (product name) (manufactured by Q-Lab Corporation)
Temperature: 35 ± 1°C
Spray liquid: 5% by mass neutralized salt water (pH 6.5 or higher and 7.2 or lower)
Spray time: 1,000 hours

(Evaluation criteria)

A: rust partially occurred in the cut part, and the rust width was less than 2 mm
B: rust partially occurred in the cut part, and the rust width was 2 mm or more
C: rust or swelling occurred in the entire cut part, and the rust width was 2 mm or more

[Evaluation 7: flex resistance]

Each coating composition was applied onto a circular tin plate having a thickness of 0.1 mm and a diameter of 100 mm so as to achieve a film thickness of 20 μm, and was left to stand in a constant temperature and humidity chamber (20°C, humidity: 65%) for 24 hours, thereby producing a coating film. A 5φ/180° bending test was performed in a thermostatic chamber at -20°C, and the presence or absence of abnormalities was visually evaluated.

(Evaluation criteria)

A: absolutely no abnormalities in view of cracks, detachment, and the like
B: occurrence of slight detachment
C: occurrence of cracks or detachment

[Evaluation 8: wear resistance]

Each coating composition was applied onto a tin plate having a thickness of 0.1 mm so as to achieve a film thickness of 20 μm, and was left to stand under constant temperature and humidity conditions (20°C, humidity: 65%) for 24 hours, thereby producing a coating film.

A Taber abrasion test was performed in accordance with the method described in ASTM D1044 under the conditions of a CS-10F abrasion wheel and a load of 1,000 g to determine the wear amount of the coating film from before the test.

(Evaluation criteria)

A: wear amount was less than 30 mg
B: wear amount was 30 mg or more and less than 50 mg
C: wear amount was 50 mg or more

[Evaluation 9: weather resistance (QUV-B), yellowing resistance]

Each coating composition was applied onto a tin plate having a thickness of 0.1 mm with a film thickness setting of 20 μm, and a weather resistance test (QUV-B) of each coating film was performed under the following conditions. Using a glossmeter (micro-TRI-gloss, manufactured by BYK-Gardner GmbH), E values before and after carrying out the test were measured, and the difference in the E values before and after the test was defined as ΔE.

Apparatus: dewpanel light control weather meter (model FDP, manufactured by Suga Test Instruments Co., Ltd.)
Irradiance: 28 $W/m^2$
Cycle: 60°C × 10% RH × 4 hours ↔ dark: 50°C × 95% RH × 4 hours
Test time: 1,000 hours

(Evaluation criteria)

A: ΔE was 5 or less
B: ΔE was 5 or more and 10 or less
C: ΔE was 10 or more

[Evaluation 10: weather resistance (QUV-B), gloss retention]

Each coating composition was applied onto a tin plate having a thickness of 0.1 mm with a film thickness setting of 20 μm, and a weather resistance test (QUV-B) of each coating film was performed under the following conditions. Using a glossmeter (micro-TRI-gloss, manufactured by BYK-Gardner GmbH), gloss values before and after carrying out the test were measured to evaluate the gloss retention rate.

Apparatus: dewpanel light control weather meter (model FDP, manufactured by Suga Test Instruments Co., Ltd.)
Irradiance: 28 $W/m^2$
Cycle: 60°C × 10% RH × 4 hours ↔ dark: 50°C × 95% RH × 4 hours
Test time: 1,000 hours

(Evaluation criteria)

A: gloss retention rate was 85% or more
B: gloss retention rate was 70 to 85%
C: gloss retention rate was 70% or less

<Synthesis of amine sulfonate>

[Synthesis Example 1]

(Synthesis of HES/TBA)

10 parts by mass of 1-propanol was added to 20 parts by mass of a 70% by mass aqueous solution of 2-hydroxyethanesulfonic acid (hereinafter sometimes abbreviated as "HES") and stirred to obtain a solution. Furthermore, tributylamine (hereinafter sometimes abbreviated as "TBA") was weighed so that the molar equivalent ratio with respect to HES was 1, and a liquid obtained by dilution with the same parts by mass of 1-propanol was added dropwise to the above solution while stirring. After 1 hour from the start of the dropwise addition, stirring was stopped, and dehydration and solvent removal were carried out using an evaporator to obtain a tributylamine salt of 2-hydroxyethanesulfonic acid (hereinafter sometimes abbreviated as "HES/TBA") having a solid content of 99.8% by mass.

[Synthesis Example 2]

(Synthesis of HES/TPA-1)

10 parts by mass of 1-propanol was added to 20 parts by mass of a 70% by mass aqueous solution of 2-hydroxyethanesulfonic acid (hereinafter sometimes abbreviated as "HES") and stirred to obtain a solution. Furthermore, tripropylamine (hereinafter sometimes abbreviated as "TPA") was weighed so that the molar equivalent ratio with respect to HES was 1, and a liquid obtained by dilution with the same parts by mass of 1-propanol was added dropwise to the above solution while stirring. After 1 hour from the start of the dropwise addition, stirring was stopped, and dehydration and solvent removal were carried out using an evaporator to obtain a tripropylamine salt of 2-hydroxyethanesulfonic acid (hereinafter sometimes abbreviated as "HES/TPA-1") having a solid content of 99.8% by mass. This HES/TBA-1 had a residual water content of 500 ppm and a residual 1-propanol content of 200 ppm.

[Synthesis Example 3]

(Synthesis of HES/TPA-2)

10 parts by mass of 1-propanol was added to 20 parts by mass of a 70% by mass aqueous solution of 2-hydroxyethanesulfonic acid (hereinafter sometimes abbreviated as "HES") and stirred to obtain a solution. Furthermore, tripropylamine (hereinafter sometimes abbreviated as "TPA") was weighed so that the molar equivalent ratio with respect to HES was 1, and a liquid obtained by dilution with the same parts by mass of 1-propanol was added dropwise to the above solution while stirring. After 1 hour from the start of the dropwise addition, stirring was stopped, and dehydration and solvent removal were carried out using an evaporator to obtain a tripropylamine salt of 2-hydroxyethanesulfonic acid (hereinafter sometimes abbreviated as "HES/TPA-2") having a solid content of 99.3% by mass. This HES/TBA-2 had a residual water content of 1,500 ppm and a residual 1-propanol content of 5,000 ppm.

<Synthesis of polycarbonate diol>

[Synthesis Example 4]

(Synthesis of PCD450)

382 g of 1,5-pentanediol, 433 g of 1,6-hexanediol, and 650 g of ethylene carbonate were charged into a 2 L separable flask equipped with a stirrer, a thermometer, and a vacuum-jacketed Oldershaw with a reflux head at the top, and after the resulting mixture was stirred and dissolved at 70°C, 0.015 g of lead acetate trihydrate was added thereto as a catalyst. The resulting mixture was heated in an oil bath set at 175°C and reacted for 12 hours at an internal temperature of the flask of 140°C and a degree of vacuum of 1.0 to 1.5 kPa while removing a part of the fraction from the reflux head at a reflux ratio of 4. After that, the Oldershaw column was replaced with a single distillation apparatus, the resulting mixture was heated in an oil bath set at 180°C, and the internal temperature of the flask was lowered to 140 to 150°C and the degree of vacuum was lowered to 0.5 kPa, thereby removing the diol and ethylene carbonate remaining in the separable flask. Thereafter, the setting of the temperature of the oil bath was raised to 185°C, and the reaction was further carried out for 1.3 hours at an internal temperature of the flask of 160 to 165°C while removing the produced diol. As a result of the reaction, a polycarbonate diol (PCD450) in the form of a viscous liquid at room temperature was obtained. The obtained polycarbonate diol had a hydroxyl value of 249.1 (molecular weight: 450) and a copolymer composition of 1,5-pentanediol/1,6-hexanediol = 50/50 (molar ratio).

<Production of polyisocyanate>

[Synthesis Example 5]

(Production of polyisocyanate P-1)

A nitrogen atmosphere was established in a four-necked flask equipped with a stirrer, a thermometer, a reflux condenser tube, a nitrogen blowing tube and a dropping funnel, 1,000 parts by mass of HDI and 30 parts by mass of 2-ethylhexanol were charged thereinto, and a urethane-forming reaction was carried out at 90°C while stirring for 1 hour. 1.0 parts by mass of a solution obtained by diluting tetramethylammonium caprate with isobutanol to 5% by mass was added as an allophanate-forming and isocyanurate-forming catalyst to carry out an allophanate-forming reaction and an isocyanurate-forming reaction. At the point where the refractive index of the reaction solution reached 0.012, phosphoric acid was added to terminate the reaction. The reaction solution was heated at 160°C for 1 hour, cooled, and filtered, and then unreacted HDI was removed using a thin film evaporator to obtain a polyisocyanate composition P-1. The obtained polyisocyanate composition P-1 had a viscosity of 470 mPa·s at 25°C and an NCO content of 23.2% by mass.

[Synthesis Example 6]

(Production of polyisocyanate P-2)

A nitrogen atmosphere was established in the same apparatus as in Synthesis Example 5, 1,000 g of HDI and 3.1 parts by mass of 2-ethylhexanol were charged thereinto, and the temperature in the reactor was maintained at 80°C for 2 hours while stirring. Thereafter, tetramethylammonium caprate serving as an isocyanurate-forming reaction catalyst was added thereto, and phosphoric acid was added to terminate the reaction at the point where the yield reached 30% by mass. After filtering the reaction solution, unreacted HDI was removed using a thin film evaporator to obtain a polyisocyanate composition P-2. The obtained polyisocyanate composition P-2 had a viscosity of 1,800 mPa·s at 25°C and an NCO content of 22.3% by mass.

[Synthesis Example 7]

(Production of polyisocyanate P-3)

A nitrogen atmosphere was established in the same apparatus as in Synthesis Example 5, 600 g of HDI was charged thereinto, and the temperature in the reactor was maintained at 60°C while stirring. Tri-n-butylphosphine (Cytop (trademark) 340, manufactured by Cytec Industries Inc.) serving as a uretdione-forming reaction catalyst was added thereto to carry out a uretdione-forming reaction and an isocyanurate-forming reaction, and 12 g of methyl-p-toluenesulfonate was added to terminate the reaction at the point where the conversion rate reached 55%. After cooling and filtering the reaction solution, unreacted HDI was removed using a thin film evaporator to obtain a polyisocyanate composition P-3. The obtained polyisocyanate composition P-3 had a viscosity of 420 mPa·s at 25°C and an NCO content of 23.1% by mass.

[Synthesis Example 8]

(Production of polyisocyanate P-4)

A nitrogen atmosphere was established in the same apparatus as in Synthesis Example 5, 600 g of HDI was charged thereinto, and the temperature in the reactor was maintained at 60°C while stirring. Tri-n-butylphosphine (Cytop (trademark) 340, manufactured by Cytec Industries Inc.) serving as a uretdione-forming reaction catalyst was added thereto to carry out a uretdione-forming reaction and an isocyanurate-forming reaction, and 12 g of methyl-p-toluenesulfonate was added to terminate the reaction at the point where the conversion rate reached 48%. After cooling and filtering the reaction solution, unreacted HDI was removed using a thin film evaporator to obtain a polyisocyanate composition P-4. The obtained polyisocyanate composition P-4 had a viscosity of 310 mPa·s at 25°C and an NCO content of 23.4% by mass.

[Synthesis Example 9]

(Production of polyisocyanate P-5)

A nitrogen atmosphere was established in the same apparatus as in Synthesis Example 5, 1,000 g of HDI and 3.1 parts by mass of 2-ethylhexanol were charged thereinto, and the temperature in the reactor was maintained at 80°C for 2 hours while stirring. Thereafter, tetramethylammonium caprate serving as an isocyanurate-forming reaction catalyst was added thereto, and phosphoric acid was added to terminate the reaction at the point where the yield reached 55% by mass. After filtering the reaction solution, unreacted HDI was removed using a thin film evaporator to obtain a polyisocyanate composition P-5. The obtained polyisocyanate composition P-5 had a viscosity of 13,200 mPa·s at 25°C and an NCO content of 18.0% by mass.

[Synthesis Example 10]

(Production of polyisocyanate P-6)

A nitrogen atmosphere was established in the same apparatus as in Synthesis Example 5, 1,000 g of HDI and 3.1 parts by mass of 2-ethylhexanol were charged thereinto, and the temperature in the reactor was maintained at 80°C for 2 hours while stirring. Thereafter, tetramethylammonium caprate serving as an isocyanurate-forming reaction catalyst was added thereto, and phosphoric acid was added to terminate the reaction at the point where the yield reached 48% by mass. After filtering the reaction solution, unreacted HDI was removed using a thin film evaporator to obtain a polyisocyanate composition P-6. The obtained polyisocyanate composition P-6 had a viscosity of 8,200 mPa·s at 25°C and an NCO content of 19.7% by mass.

[Synthesis Example 11]

(Production of polyisocyanate P-7)

A nitrogen atmosphere was established in the same apparatus as in Synthesis Example 5, 1,000 g of HDI and 3.1 parts by mass of 2-ethylhexanol were charged thereinto, and the temperature in the reactor was maintained at 80°C for 2 hours while stirring. Thereafter, tetramethylammonium caprate serving as an isocyanurate-forming reaction catalyst was added thereto, and phosphoric acid was added to terminate the reaction at the point where the yield reached 22% by mass. After filtering the reaction solution, unreacted HDI was removed using a thin film evaporator to obtain a polyisocyanate composition P-7. The obtained polyisocyanate composition P-7 had a viscosity of 1,130 mPa·s at 25°C and an NCO content of 23.3% by mass.

[Synthesis Example 12]

(Production of polyisocyanate P-8)

A nitrogen atmosphere was established in the same apparatus as in Synthesis Example 5, 1,000 g of HDI and 3.1 parts by mass of 2-ethylhexanol were charged thereinto, and the temperature in the reactor was maintained at 80°C for 2 hours while stirring. Thereafter, tetramethylammonium caprate serving as an isocyanurate-forming reaction catalyst was added thereto, and phosphoric acid was added to terminate the reaction at the point where the yield reached 15% by mass. After filtering the reaction solution, unreacted HDI was removed using a thin film evaporator to obtain a polyisocyanate composition P-8. The obtained polyisocyanate composition P-8 had a viscosity of 730 mPa·s at 25°C and an NCO content of 23.8% by mass.

[Example 1]

(Production and evaluation of polyisocyanate composition PA-1)

A nitrogen atmosphere was established in the same apparatus as in Synthesis Example 5, 1.0 g of 1,3-butanediol (1,3-BG) and 4.0 g of the tributylamine salt of 2-hydroxyethanesulfonic acid (HES/TBA) obtained in Synthesis Example 1 were added to 95 g of the polyisocyanate P-1 obtained in Synthesis Example 5, and the resulting mixture was stirred at 120°C for 4 hours to carry out a reaction, thereby obtaining a polyisocyanate composition PA-1. Table 1 shows the physical properties and evaluation results of the obtained polyisocyanate composition PA-1.

[Example 2]

(Production and evaluation of polyisocyanate composition PA-2)

A polyisocyanate composition PA-2 was obtained in the same manner as in Example 1 with the exception that 93.5 g of the polyisocyanate P-1 and 2.5 g of 1,3-butanediol (1,3-BG) were used. Table 1 shows the physical properties and evaluation results of the obtained polyisocyanate composition PA-2.

[Example 3]

(Production and evaluation of polyisocyanate composition PA-3)

A polyisocyanate composition PA-3 was obtained in the same manner as in Example 1 with the exception that 92 g of the polyisocyanate P-1 and 4.0 g of 1,3-butanediol (1,3-BG) were used. Table 1 shows the physical properties and evaluation results of the obtained polyisocyanate composition PA-3.

[Example 4]

(Production and evaluation of polyisocyanate composition PA-4)

A polyisocyanate composition PA-4 was obtained in the same manner as in Example 1 with the exception that 91 g of the polyisocyanate P-1 and 5.0 g of 1,3-butanediol (1,3-BG) were used. Table 1 shows the physical properties and evaluation results of the obtained polyisocyanate composition PA-4.

[Example 5]

(Production and evaluation of polyisocyanate composition PA-5)

A polyisocyanate composition PA-5 was obtained in the same manner as in Example 1 with the exception that 1.0 g of 1,2-propanediol (1,2-PG) was used. Table 1 shows the physical properties and evaluation results of the obtained polyisocyanate composition PA-5.

[Example 6]

(Production and evaluation of polyisocyanate composition PA-6)

A polyisocyanate composition PA-6 was obtained in the same manner as in Example 1 with the exception that 1.0 g of trimethylolpropane (TMP) was used. Table 1 shows the physical properties and evaluation results of the obtained polyisocyanate composition PA-6.

[Example 7]

(Production and evaluation of polyisocyanate composition PA-7)

A polyisocyanate composition PA-7 was obtained in the same manner as in Example 1 with the exception that 1.0 g of polycaprolactone triol (Placcel 303 (PL303), manufactured by Daicel Corporation) was used. Table 1 shows the physical properties and evaluation results of the obtained polyisocyanate composition PA-7.

[Example 8]

(Production and evaluation of polyisocyanate composition PA-8)

A polyisocyanate composition PA-8 was obtained in the same manner as in Example 1 with the exception that 1.0 g of PCD450 obtained in Synthesis Example 3 was used. Table 1 shows the physical properties and evaluation results of the obtained polyisocyanate composition PA-8.

[Example 9]

(Production and evaluation of polyisocyanate composition PA-9)

A nitrogen atmosphere was established in the same apparatus as in Synthesis Example 5, 0.4 g of 1,3-butanediol (1,3-BG) and 1.2 g of the tributylamine salt of 2-hydroxyethanesulfonic acid (HES/TBA) obtained in Synthesis Example 1 were added to 98.4 g of the polyisocyanate P-2 obtained in Synthesis Example 6, and the resulting mixture was stirred at 120°C for 4 hours to carry out a reaction, thereby obtaining a polyisocyanate composition PA-9. Table 2 shows the physical properties and evaluation results of the obtained polyisocyanate composition PA-9.

[Example 10]

(Production and evaluation of polyisocyanate composition PA-10)

A polyisocyanate composition PA-10 was obtained in the same manner as in Example 9 with the exception that 97.1 g of the polyisocyanate P-2 and 2.5 g of the tributylamine salt of 2-hydroxyethanesulfonic acid (HES/TBA) were used. Table 2 shows the physical properties and evaluation results of the obtained polyisocyanate composition PA-10.

[Example 11]

(Production and evaluation of polyisocyanate composition PA-11)

A polyisocyanate composition PA-11 was obtained in the same manner as in Example 9 with the exception that 95.6 g of the polyisocyanate P-2 and 4.0 g of the tributylamine salt of 2-hydroxyethanesulfonic acid (HES/TBA) were used. Table 2 shows the physical properties and evaluation results of the obtained polyisocyanate composition PA-11.

[Example 12]

(Production and evaluation of polyisocyanate composition PA-12)

A polyisocyanate composition PA-12 was obtained in the same manner as in Example 9 with the exception that 89.6 g of the polyisocyanate P-2 and 10.0 g of the tributylamine salt of 2-hydroxyethanesulfonic acid (HES/TBA) were used. Table 2 shows the physical properties and evaluation results of the obtained polyisocyanate composition PA-12.

[Example 13]

(Production and evaluation of polyisocyanate composition PA-13)

A nitrogen atmosphere was established in the same apparatus as in Synthesis Example 5, 0.4 g of 1,3-butanediol (1,3-BG) and 4.0 g of the tributylamine salt of 2-hydroxyethanesulfonic acid (HES/TBA) obtained in Synthesis Example 1 were added to 47.8 g of the polyisocyanate P-2 obtained in Synthesis Example 6, and the resulting mixture was stirred at 120°C for 4 hours to carry out a reaction. After completion of the reaction, 47.8 g of the polyisocyanate P-2 obtained in Synthesis Example 4 was added and mixed to obtain a polyisocyanate composition PA-13. Table 2 shows the physical properties and evaluation results of the obtained polyisocyanate composition PA-13.

[Example 14]

(Production and evaluation of polyisocyanate composition PA-14)

A nitrogen atmosphere was established in the same apparatus as in Synthesis Example 5, 0.4 g of 1,3-butanediol (1,3-BG) and 1.2 g of the tributylamine salt of 2-hydroxyethanesulfonic acid (HES/TBA) obtained in Synthesis Example 1 were added to 14.9 g of the polyisocyanate P-1 obtained in Synthesis Example 5, and the resulting mixture was stirred at 120°C for 4 hours to carry out a reaction. After completion of the reaction, 83.5 g of the polyisocyanate P-1 obtained in Synthesis Example 1 was added and mixed to obtain a polyisocyanate composition PA-14. Table 2 shows the physical properties and evaluation results of the obtained polyisocyanate composition PA-14.

[Example 15]

(Production and evaluation of polyisocyanate composition PA-15)

A nitrogen atmosphere was established in the same apparatus as in Synthesis Example 5, 0.4 g of 1,3-butanediol (1,3-BG) and 1.2 g of the tributylamine salt of 2-hydroxyethanesulfonic acid (HES/TBA) obtained in Synthesis Example 1 were added to 98.4 g of the polyisocyanate P-1 obtained in Synthesis Example 5, and the resulting mixture was stirred at 120°C for 4 hours to carry out a reaction, thereby obtaining a polyisocyanate composition PA-15. Table 2 shows the physical properties and evaluation results of the obtained polyisocyanate composition PA-15.

[Example 16]

(Production and evaluation of polyisocyanate composition PA-16)

A nitrogen atmosphere was established in the same apparatus as in Synthesis Example 5, 0.4 g of 1,3-butanediol (1,3-BG) and 1.2 g of the tributylamine salt of 2-hydroxyethanesulfonic acid (HES/TBA) obtained in Synthesis Example 1 were added to 98.4 g of the polyisocyanate P-3 obtained in Synthesis Example 7, and the resulting mixture was stirred at 120°C for 4 hours to carry out a reaction, thereby obtaining a polyisocyanate composition PA-16. Table 2 shows the physical properties and evaluation results of the obtained polyisocyanate composition PA-16.

[Example 17]

(Production and evaluation of polyisocyanate composition PA-17)

A nitrogen atmosphere was established in the same apparatus as in Synthesis Example 5, 0.4 g of 1,3-butanediol (1,3-BG) and 1.2 g of the tributylamine salt of 2-hydroxyethanesulfonic acid (HES/TBA) obtained in Synthesis Example 1 were added to 98.4 g of the polyisocyanate P-4 obtained in Synthesis Example 8, and the resulting mixture was stirred at 120°C for 4 hours to carry out a reaction, thereby obtaining a polyisocyanate composition PA-17. Table 3 shows the physical properties and evaluation results of the obtained polyisocyanate composition PA-17.

[Example 18]

(Production and evaluation of polyisocyanate composition PA-18)

A nitrogen atmosphere was established in the same apparatus as in Synthesis Example 5, 0.4 g of 1,3-butanediol (1,3-BG) and 4.0 g of the tributylamine salt of 2-hydroxyethanesulfonic acid (HES/TBA) obtained in Synthesis Example 1 were added to 95.6 g of the polyisocyanate P-5 obtained in Synthesis Example 9, and the resulting mixture was stirred at 120°C for 4 hours to carry out a reaction, thereby obtaining a polyisocyanate composition PA-18. Table 3 shows the physical properties and evaluation results of the obtained polyisocyanate composition PA-18.

[Example 19]

(Production and evaluation of polyisocyanate composition PA-19)

A polyisocyanate composition PA-19 was obtained in the same manner as in Synthesis Example 18 with the exception that 95.6 g of the polyisocyanate P-6 obtained in Synthesis Example 10 was used. Table 3 shows the physical properties and evaluation results of the obtained polyisocyanate composition PA-19.

[Example 20]

(Production and evaluation of polyisocyanate composition PA-20)

A polyisocyanate composition PA-20 was obtained in the same manner as in Synthesis Example 18 with the exception that 95.6 g of the polyisocyanate P-7 obtained in Synthesis Example 11 was used. Table 3 shows the physical properties and evaluation results of the obtained polyisocyanate composition PA-20.

[Example 21]

(Production and evaluation of polyisocyanate composition PA-21)

A polyisocyanate composition PA-21 was obtained in the same manner as in Synthesis Example 18 with the exception that 95.6 g of the polyisocyanate P-8 obtained in Synthesis Example 12 was used. Table 3 shows the physical properties and evaluation results of the obtained polyisocyanate composition PA-21.

[Example 22]

(Production and evaluation of polyisocyanate composition PA-22)

A nitrogen atmosphere was established in the same apparatus as in Synthesis Example 5, 0.4 g of 1,3-butanediol (1,3-BG), 2.5 g of 3-cyclohexylaminopropanesulfonic acid (CAPS) and 1.5 g of N,N-dimethylcyclohexylamine (DMCHA) were added to 95.6 g of the polyisocyanate P-1 obtained in Synthesis Example 5, and the resulting mixture was stirred at 80°C for 5 hours to carry out a reaction, thereby obtaining a polyisocyanate composition PA-22. Table 3 shows the physical properties and evaluation results of the obtained polyisocyanate composition PA-22.

[Example 23]

(Production and evaluation of polyisocyanate composition PA-23)

A nitrogen atmosphere was established in the same apparatus as in Synthesis Example 5, 0.4 g of 1,3-butanediol (1,3-BG), 2.6 g of 3-cyclohexylaminobutanesulfonic acid (CABS) and 1.4 g of N,N-dimethylcyclohexylamine (DMCHA) were added to 95.6 g of the polyisocyanate P-1 obtained in Synthesis Example 5, and the resulting mixture was stirred at 80°C for 5 hours to carry out a reaction, thereby obtaining a polyisocyanate composition PA-23. Table 3 shows the physical properties and evaluation results of the obtained polyisocyanate composition PA-23.

[Example 24]

(Production and evaluation of blocked polyisocyanate composition B-1)

A nitrogen atmosphere was established in the same apparatus as in Synthesis Example 5, 47.4 g of 3,5-dimethylpyrazole was added to 100.0 g of the polyisocyanate PA-11 obtained in Example 11 and 62.5 g of dipropylene glycol monomethyl ether, and the resulting mixture was stirred at 80°C for 2 hours to carry out a reaction, thereby obtaining a blocked polyisocyanate B-1. Table 3 shows the physical properties and evaluation results of the obtained blocked polyisocyanate composition B-1.

[Example 25]

(Production and evaluation of polyisocyanate composition PA-24)

A nitrogen atmosphere was established in the same apparatus as in Synthesis Example 5, 0.4 g of 1,3-butanediol (1,3-BG) and 2.5 g of the tripropylamine salt of 2-hydroxyethanesulfonic acid (HES/TPA-1) obtained in Synthesis Example 3 were added to 97.1 g of the polyisocyanate P-2 obtained in Synthesis Example 6, and the resulting mixture was stirred at 120°C for 4 hours to carry out a reaction, thereby obtaining a polyisocyanate composition PA-24. Table 4 shows the physical properties and evaluation results of the obtained polyisocyanate composition PA-24.

[Example 26]

(Evaluation of polyisocyanate composition PA-25)

A nitrogen atmosphere was established in the same apparatus as in Synthesis Example 5, 2.5 g of 1,3-butanediol (1,3-BG) and 4.0 g of the tripropylamine salt of 2-hydroxyethanesulfonic acid (HES/TPA-1) obtained in Synthesis Example 3 were added to 93.5 g of the polyisocyanate P-1 obtained in Synthesis Example 5, and the resulting mixture was stirred at 120°C for 4 hours to carry out a reaction, thereby obtaining a polyisocyanate composition PA-25. Table 4 shows the physical properties and evaluation results of the obtained polyisocyanate composition PA-25.

[Example 27]

(Evaluation of polyisocyanate composition PA-26)

A nitrogen atmosphere was established in the same apparatus as in Synthesis Example 5, 0.4 g of 1,3-butanediol (1,3-BG) and 4.0 g of the tripropylamine salt of 2-hydroxyethanesulfonic acid (HES/TPA-1) obtained in Synthesis Example 3 were added to 95.6 g of the polyisocyanate P-2 obtained in Synthesis Example 6, and the resulting mixture was stirred at 120°C for 4 hours to carry out a reaction, thereby obtaining a polyisocyanate composition PA-26. Table 4 shows the

physical properties and evaluation results of the obtained polyisocyanate composition PA-26.

[Example 28]

(Evaluation of polyisocyanate composition PA-27)

A nitrogen atmosphere was established in the same apparatus as in Synthesis Example 5, 0.4 g of 1,3-butanediol (1,3-BG) and 1.2 g of the tripropylamine salt of 2-hydroxyethanesulfonic acid (HES/TPA-1) obtained in Synthesis Example 3 were added to 98.4 g of the polyisocyanate P-1 obtained in Synthesis Example 5, and the resulting mixture was stirred at 120°C for 4 hours to carry out a reaction, thereby obtaining a polyisocyanate composition PA-27. Table 4 shows the physical properties and evaluation results of the obtained polyisocyanate composition PA-27.

[Example 29]

(Production and evaluation of polyisocyanate composition PA-28)

A polyisocyanate composition PA-28 was obtained in the same manner as in Example 25 with the exception that the tripropylamine salt of 2-hydroxyethanesulfonic acid (HES/TPA-2) was used. Table 4 shows the physical properties and evaluation results of the obtained PA-28.

[Example 30]

(Production and evaluation of polyisocyanate composition PA-29)

A polyisocyanate composition PA-29 was obtained in the same manner as in Example 28 with the exception that the tripropylamine salt of 2-hydroxyethanesulfonic acid (HES/TPA-2) was used. Table 4 shows the physical properties and evaluation results of the obtained PA-29.

[Example 31]

(Production and evaluation of polyisocyanate composition PA-10)

Using the polyisocyanate composition PA-10 produced in Example 10, a coating composition was prepared and evaluated in Preparation Example 2. Table 4 shows the physical properties and evaluation results thereof.

[Example 32]

(Production and evaluation of polyisocyanate composition PA-14)

Using the polyisocyanate composition PA-14 produced in Example 14, a coating composition was prepared and evaluated in Preparation Example 2. Table 4 shows the physical properties and evaluation results thereof.

[Example 33]

(Evaluation of polyisocyanate composition PA-24)

Using the polyisocyanate composition PA-24 produced in Example 25, a coating composition was prepared and evaluated in Preparation Example 4. Table 5 shows the physical properties and evaluation results thereof.

[Example 34]

(Evaluation of polyisocyanate composition PA-25)

Using the polyisocyanate composition PA-25 produced in Example 26, a coating composition was prepared and evaluated in Preparation Example 4. Table 5 shows the physical properties and evaluation results thereof.

[Example 35]

(Evaluation of polyisocyanate composition PA-26)

Using the polyisocyanate composition PA-26 produced in Example 27, a coating composition was prepared and evaluated in Preparation Example 4. Table 5 shows the physical properties and evaluation results thereof.

[Example 36]

(Evaluation of polyisocyanate composition PA-27)

Using the polyisocyanate composition PA-27 produced in Example 28, a coating composition was prepared and evaluated in Preparation Example 4. Table 5 shows the physical properties and evaluation results thereof.

[Example 37]

(Evaluation of polyisocyanate composition PA-24)

Using the polyisocyanate composition PA-24 produced in Example 25, a coating composition was prepared and evaluated in Preparation Example 5. Table 5 shows the physical properties and evaluation results thereof.

[Example 38]

(Evaluation of polyisocyanate composition PA-25)

Using the polyisocyanate composition PA-25 produced in Example 26, a coating composition was prepared and evaluated in Preparation Example 5. Table 5 shows the physical properties and evaluation results thereof.

[Example 39]

(Evaluation of polyisocyanate composition PA-26)

Using the polyisocyanate composition PA-26 produced in Example 27, a coating composition was prepared and evaluated in Preparation Example 5. Table 5 shows the physical properties and evaluation results thereof.

[Example 40]

(Evaluation of polyisocyanate composition PA-27)

Using the polyisocyanate composition PA-27 produced in Example 28, a coating composition was prepared and evaluated in Preparation Example 5. Table 5 shows the physical properties and evaluation results thereof.

[Comparative Example 1]

(Production and evaluation of polyisocyanate composition PB-1)

A nitrogen atmosphere was established in the same apparatus as in Synthesis Example 5, 0.4 g of 1,3-butanediol (1,3-BG) and 15.0 g of the tributylamine salt of 2-hydroxyethanesulfonic acid (HES/TBA) obtained in Synthesis Example 1 were added to 84.6 g of the polyisocyanate P-1 obtained in Synthesis Example 5, and the resulting mixture was stirred at 120°C for 4 hours to carry out a reaction, thereby obtaining a polyisocyanate composition PB-1. Table 6 shows the physical properties and evaluation results of the obtained polyisocyanate composition PB-1.

[Comparative Example 2]

(Production and evaluation of polyisocyanate composition PB-2)

A nitrogen atmosphere was established in the same apparatus as in Synthesis Example 5, 4.0 g of the tributylamine salt of 2-hydroxyethanesulfonic acid (HES/TBA) obtained in Synthesis Example 1 was added to 96.0 g of the

polyisocyanate P-1 obtained in Synthesis Example 5, and the resulting mixture was stirred at 120°C for 4 hours to carry out a reaction, thereby obtaining a polyisocyanate composition PB-2. Table 6 shows the physical properties and evaluation results of the obtained polyisocyanate composition PB-2.

[Table 1]

| | | | Example 1 | Example 2 | Example 3 | Example 4 | Example 5 | Example 6 | Example 7 | Example 8 |
|---|---|---|---|---|---|---|---|---|---|---|
| Polyisocyanate composition | | | PA-1 | PA-2 | PA-3 | PA-4 | PA-5 | PA-6 | PA-7 | PA-8 |
| Composition | Polyisocyanate | Type | P-1 | P-1 | P-1 | P-1 | P-1 | P-1 | P-1 | P-1 |
| | | Parts by mass | 95.0 | 93.5 | 92.0 | 91.0 | 95.0 | 95.0 | 95.0 | 95.0 |
| | Alcohol | Type | 1,3-BG | 1,3-BG | 1,3-BG | 1,3-BG | 1,2-PG | TMP | PL303 | PCD450 |
| | | Parts by mass | 1.0 | 2.5 | 4.0 | 5.0 | 1.0 | 1.0 | 1.0 | 1.0 |
| | Anionic compound | Type | HES/TBA | HES/TBA | HES/TBA | HES/TBA | HES/TBA | HES/TBA | HES/TBA | HES/TBA |
| | | Parts by mass | 4.0 | 4.0 | 4.0 | 4.0 | 4.0 | 4.0 | 4.0 | 4.0 |
| Physical properties | Mass fraction of cyclic trimer (% by mass) | | 48.3 | 39.8 | 28.4 | 19.0 | 47.7 | 48.2 | 53.3 | 54.5 |
| | Mass fraction of uretdione dimer (% by mass) | | 13.8 | 13.4 | 12.8 | 12.4 | 13.8 | 13.2 | 13.7 | 13.7 |
| | Molar ratio of urea group and isocyanurate group | | 0.02/100 | 0.02/100 | 0.02/100 | 0.02/100 | 0.02/100 | 0.02/100 | 0.02/100 | 0.02/100 |
| | Molar ratio of urethane group and isocyanurate group | | 6.2/100 | 12.1/100 | 18.2/100 | 22.4/100 | 6.9/100 | 6.3/100 | 4.1/100 | 3.6/100 |
| | NCO content (% by mass) | | 20.4 | 18.7 | 17.1 | 15.9 | 20.4 | 20.6 | 21.1 | 21.1 |
| | Viscosity (mPa·s/25°C) | | 5,430 | 9,640 | 14,300 | 15,500 | 5,280 | 6,500 | 5,600 | 5,700 |
| Preparation Example | | | 1 | 1 | 1 | 1 | 1 | 1 | 1 | 1 |
| Evaluation | Chromaticity | | B | A | A | A | B | B | B | B |
| | Dilution turbidity | | A | A | A | A | A | A | A | B |
| | Viscosity change during blending | | B | B | C | D | B | B | B | B |
| | Acid resistance | | C | B | B | B | B | B | B | B |
| | Alkali resistance | | B | B | B | B | B | B | B | B |
| | Salt spray resistance | | B | A | A | A | A | A | B | B |

[Table 2]

| | | | Example 9 | Example 10 | Example 11 | Example 12 | Example 13 | Example 14 | Example 15 | Example 16 |
|---|---|---|---|---|---|---|---|---|---|---|
| Polyisocyanate composition | | | PA-9 | PA-10 | PA-11 | PA-12 | PA-13 | PA-14 | PA-15 | PA-16 |
| Composition | Polyisocyanate | Type | P-2 | P-2 | P-2 | P-2 | P-2 | P-1 | P-1 | P-3 |
| | | Parts by mass | 98.4 | 97.1 | 95.6 | 89.6 | 95.6 | 98.4 | 98.4 | 98.4 |
| | Alcohol | Type | 1,3-BG | 1,3-BG | 1,3-BG | 1,3-BG | 1,3-BG | 1,3-BG | 1,3-BG | 1,3-BG |
| | | Parts by mass | 0.4 | 0.4 | 0.4 | 0.4 | 0.4 | 0.4 | 0.4 | 0.4 |
| | Anionic compound | Type | HES/TBA | HES/TBA | HES/TBA | HES/TBA | HES/TBA | HES/TBA | HES/TBA | HES/TBA |
| | | Parts by mass | 1.2 | 2.5 | 4.0 | 10.0 | 4.0 | 1.2 | 1.2 | 1.2 |
| Physical properties | Mass fraction of cyclic trimer (% by mass) | | 51.3 | 48.3 | 43.0 | 38.7 | 42.0 | 60.3 | 60.5 | 59.2 |
| | Mass fraction of uretdione dimer (% by mass) | | 0.8 | 0.9 | 0.9 | 0.8 | 0.9 | 13.6 | 13.7 | 19.8 |
| | Molar ratio of urea group and isocyanurate group | | 0.004/100 | 0.01/100 | 0.02/100 | 0.04/100 | 0.02/100 | 0.01/100 | 0.01/100 | 0.01/100 |
| | Molar ratio of urethane group and isocyanurate group | | 1.7/100 | 2.2/100 | 2.9/100 | 5.8/100 | 2.9/100 | 2.1/100 | 2.1/100 | 2.1/100 |
| | NCO content (% by mass) | | 21.6 | 21.1 | 20.5 | 19.0 | 20.6 | 22.4 | 22.5 | 22.4 |
| | Viscosity (mPa·s/25°C) | | 2,200 | 3,670 | 4,560 | 14,500 | 4,450 | 680 | 700 | 530 |
| Preparation Example | | | 1 | 1 | 1 | 1 | 1 | 1 | 1 | 1 |
| Evaluation | Chromaticity | | B | B | B | C | B | B | B | B |
| | Dilution turbidity | | A | A | A | B | A | A | B | B |
| | Viscosity change during blending | | A | A | B | C | B | A | A | A |
| | Acid resistance | | B | B | B | B | B | C | C | C |
| | Alkali resistance | | A | B | B | C | B | A | A | B |
| | Salt spray resistance | | A | B | B | C | B | A | A | B |

[Table 3]

| | | | Example 17 | Example 18 | Example 19 | Example 20 | Example 21 | Example 22 | Example 23 | Example 24 |
|---|---|---|---|---|---|---|---|---|---|---|
| (Blocked) polyisocyanate composition | | | PA-17 | PA-18 | PA-19 | PA-20 | PA-21 | PA-22 | PA-23 | B-1 |
| Composition | Polyisocyanate | Type | P-4 | P-5 | P-6 | P-7 | P-8 | P-1 | P-1 | PA-11 |
| | | Parts by mass | 98.4 | 95.6 | 95.6 | 95.6 | 95.6 | 95.6 | 95.6 | - |
| | Alcohol | Type | 1,3-BG | 1,3-BG | 1,3-BG | 1,3-BG | 1,3-BG | 1,3-BG | 1,3-BG | - |
| | | Parts by mass | 0.4 | 0.4 | 0.4 | 0.4 | 0.4 | 0.4 | 0.4 | - |
| | Anionic compound | Type | HES/TBA | HES/TBA | HES/TBA | HES/TBA | HES/TBA | CAPS/DMCHA | CABS/DMCHA | - |
| | | Parts by mass | 1.2 | 4.0 | 4.0 | 4.0 | 4.0 | 4.0 | 4.0 | - |
| Physical properties | Mass fraction of cyclic trimer (% by mass) | | 59.0 | 19.0 | 28.3 | 64.1 | 72.0 | 53.0 | 54.3 | - |
| | Mass fraction of uretdione dimer (% by mass) | | 24.2 | 0.7 | 0.4 | 0.7 | 0.9 | 13.6 | 13.3 | - |
| | Molar ratio of urea group and isocyanurate group | | 0.004/100 | 0.02/100 | 0.02/100 | 0.01/100 | 0.01/100 | 0.02/100 | 0.02/100 | - |
| | Molar ratio of urethane group and isocyanurate group | | 1.4/100 | 3.4/100 | 3.1/100 | 2.6/100 | 2.6/100 | 3.7/100 | 3.6/100 | - |
| | NCO content (% by mass) | | 22.5 | 16.2 | 17.6 | 21.3 | 22.0 | 21.1 | 21.1 | - |
| | Viscosity (mPa·s/25°C) | | 450 | 25,300 | 17,500 | 3,100 | 1,930 | 2,600 | 2,750 | 4,100 |
| Preparation Example | | | 1 | 1 | 1 | 1 | 1 | 1 | 1 | 3 |
| Evaluation | Chromaticity | | B | B | B | B | B | B | B | B |
| | Dilution turbidity | | C | B | B | B | C | B | B | - |
| | Viscosity change during blending | | A | D | C | B | B | B | B | - |
| | Acid resistance | | D | A | A | C | C | C | C | B |
| | Alkali resistance | | D | C | B | C | D | C | C | B |
| | Salt spray resistance | | C | C | B | C | D | C | C | B |

[Table 4]

| | | | Example 25 | Example 26 | Example 27 | Example 28 | Example 29 | Example 30 | Example 31 | Example 32 |
|---|---|---|---|---|---|---|---|---|---|---|
| Polyisocyanate composition | | | PA-24 | PA-25 | PA-26 | PA-27 | PA-28 | PA-29 | PA-10 | PA-14 |
| Composition | Polyisocyanate | Type | P-2 | P-1 | P-2 | P-1 | P-2 | P-1 | P-2 | P-1 |
| | | Parts by mass | 97.1 | 93.5 | 95.6 | 98.4 | 97.1 | 98.4 | 97.1 | 98.4 |
| | Alcohol | Type | 1,3-BG | 1,3-BG | 1,3-BG | 1,3-BG | 1,3-BG | 1,3-BG | 1,3-BG | 1,3-BG |
| | | Parts by mass | 0.4 | 2.5 | 0.4 | 0.4 | 0.4 | 0.4 | 0.4 | 0.4 |
| | Anionic compound | Type | HES/TPA-1 | HES/TPA-1 | HES/TPA-1 | HES/TPA-1 | HES/TPA-2 | HES/TPA-2 | HES/TPA-1 | HES/TPA-1 |
| | | Parts by mass | 2.5 | 4.0 | 4.0 | 1.2 | 2.5 | 1.2 | 2.5 | 1.2 |
| Physical properties | Mass fraction of cyclic trimer (% by mass) | | 48.2 | 39.8 | 43.1 | 60.8 | 48.3 | 60.3 | 48.3 | 60.3 |
| | Mass fraction of uretdione dimer (% by mass) | | 0.9 | 13.4 | 0.9 | 13.6 | 0.9 | 13.6 | 0.9 | 13.6 |
| | Molar ratio of urea group and isocyanurate group | | 0.01/100 | 0.01/100 | 0.01/100 | 0.01/100 | 0.01/100 | 0.01/100 | 0.01/100 | 0.01/100 |
| | Molar ratio of urethane group and isocyanurate group | | 2.1/100 | 8.2/100 | 2.7/100 | 1.5/100 | 2.1/100 | 1.5/100 | 2.2/100 | 2.1/100 |
| | NCO content (% by mass) | | 21.0 | 18.7 | 20.6 | 22.4 | 20.9 | 22.1 | 21.1 | 22.4 |
| | Viscosity (mPa·s/25°C) | | 3,670 | 9,640 | 4,360 | 660 | 3,960 | 850 | 3,670 | 680 |
| Preparation Example | | | 1 | 1 | 1 | 1 | 1 | 1 | 2 | 2 |
| Evaluation | Chromaticity | | B | A | B | B | B | B | B | B |
| | Dilution turbidity | | A | A | A | A | A | A | A | A |
| | Viscosity change during blending | | A | B | B | A | A | A | A | A |
| | Acid resistance | | B | B | B | C | B | C | B | C |
| | Alkali resistance | | B | B | B | A | B | A | B | A |
| | Salt spray resistance | | B | A | B | A | B | A | B | A |

[Table 5]

| | | | Example 33 | Example 34 | Example 35 | Example 36 | Example 37 | Example 38 | Example 39 | Example 40 |
|---|---|---|---|---|---|---|---|---|---|---|
| Polyisocyanate composition | | | PA-24 | PA-25 | PA-26 | PA-27 | PA-24 | PA-25 | PA-26 | PA-27 |
| Composition | Polyisocyanate | Type | P-2 | P-1 | P-2 | P-1 | P-2 | P-1 | P-2 | P-1 |
| | | Parts by mass | 97.1 | 93.5 | 95.6 | 98.4 | 97.1 | 93.5 | 95.6 | 98.4 |
| | Alcohol | Type | 1,3-BG | 1,3-BG | 1,3-BG | 1,3-BG | 1,3-BG | 1,3-BG | 1,3-BG | 1,3-BG |
| | | Parts by mass | 0.4 | 2.5 | 0.4 | 0.4 | 0.4 | 2.5 | 0.4 | 0.4 |
| | Anionic compound | Type | HES/TPA-1 | HES/TPA-1 | HES/TPA-1 | HES/TPA-1 | HES/TPA-1 | HES/TPA-1 | HES/TPA-1 | HES/TPA-1 |
| | | Parts by mass | 2.5 | 4.0 | 4.0 | 1.2 | 2.5 | 4.0 | 4.0 | 1.2 |
| Physical properties | Mass fraction of cyclic trimer (% by mass) | | 48.2 | 39.8 | 43.1 | 60.8 | 48.2 | 39.8 | 43.1 | 60.8 |
| | Mass fraction of uretdione dimer (% by mass) | | 0.9 | 13.4 | 0.9 | 13.6 | 0.9 | 13.4 | 0.9 | 13.6 |
| | NCO content (% by mass) | | 21.0 | 18.7 | 20.6 | 22.4 | 21.0 | 18.7 | 20.6 | 22.4 |
| | Viscosity (mPa·s/25°C) | | 3,670 | 9,640 | 4,360 | 660 | 3,670 | 9,640 | 4,360 | 660 |
| Preparation Example | | | 4 | 4 | 4 | 4 | 5 | 5 | 5 | 5 |
| Evaluation | Flex resistance | | C | B | B | B | C | B | B | B |
| | Wear resistance | | C | C | C | B | C | C | C | B |
| | Weather resistance (yellowing resistance) | | C | C | C | B | C | B | B | B |
| | Weather resistance (gloss retention) | | C | C | C | B | B | B | B | B |

[Table 6]

| | | | Comparative Example 1 | Comparative Example 2 |
|---|---|---|---|---|
| Polyisocyanate composition | | | PB-1 | PB-2 |
| Composition | Polyisocyanate | Type | P-1 | P-1 |
| | | Parts by mass | 84.6 | 96.0 |
| | Alcohol | Type | 1,3-BG | 1,3-BG |
| | | Parts by mass | 0.4 | 0.0 |
| | Anionic compound | Type | HES/TBA | HES/TBA |
| | | Parts by mass | 15.0 | 4.0 |
| Physical properties | Mass fraction of cyclic trimer (% by mass) | | 36.0 | 53.3 |
| | Mass fraction of uretdione dimer (% by mass) | | 12.8 | 13.5 |
| | Molar ratio of urea group and isocyanurate group | | 0.08/100 | 0.02/100 |
| | Molar ratio of urethane group and isocyanurate group | | 11.0/100 | 2.2/100 |
| | NCO content (% by mass) | | 17.0 | 21.7 |
| | Viscosity (mPa·s/25°C) | | 15,400 | 1,700 |
| Preparation Example | | | 1 | 1 |
| Evaluation | Chromaticity | | D | C |
| | Dilution turbidity | | C | D |
| | Viscosity change during blending | | D | C |
| | Acid resistance | | D | D |
| | Alkali resistance | | D | C |
| | Salt spray resistance | | D | C |

INDUSTRIAL APPLICABILITY

According to the polyisocyanate composition of the present embodiment, it is possible to provide a polyisocyanate composition having: favorable chromaticity; low turbidity when diluted with a hydrophilic solvent; small changes in viscosity when blended with a main agent; and excellent acid resistance, alkali resistance and salt spray resistance when formed into a coating film. In addition, it is possible to provide an aqueous coating composition and a coated substrate using the above polyisocyanate composition.

**Claims**

**1.** A polyisocyanate composition comprising a hydrophilic polyisocyanate, wherein

said hydrophilic polyisocyanate is a reaction product of a polyisocyanate, an anionic compound and an alcohol,
said polyisocyanate is derived from one or more diisocyanates selected from the group consisting of an aliphatic diisocyanate, an alicyclic diisocyanate and an aromatic diisocyanate,
said anionic compound contains an active hydrogen group and has a mass fraction of 0.1% by mass or more and 13.0% by mass or less, and
said alcohol has an average number of hydroxyl groups per molecule of 2.0 or more and 3.5 or less and a number average molecular weight of 450 or less.

2. The polyisocyanate composition according to Claim 1, wherein a mass fraction of said alcohol in said polyisocyanate composition is 0.01% by mass or more and 4.5% by mass or less.

3. The polyisocyanate composition according to Claim 1 or 2, wherein a mass fraction of said alcohol in said polyisocyanate composition is 0.01% by mass or more and 2.5% by mass or less.

4. The polyisocyanate composition according to Claim 1 or 2, wherein a mass fraction of a cyclic trimer derived from a diisocyanate is 20.0% by mass or more and 70.0% by mass or less.

5. The polyisocyanate composition according to Claim 1 or 2, wherein a mass fraction of a uretdione dimer is 0.01% by mass or more and 20.0% by mass or less.

6. The polyisocyanate composition according to Claim 1 or 2, which has an isocyanate group concentration of 17.0% by mass or more and 24.0% by mass or less.

7. The polyisocyanate composition according to Claim 1 or 2, further comprising a urea group and an isocyanurate group, wherein a molar ratio of said urea group and the isocyanurate group (urea group/isocyanurate group) is 0.02/100 or more and 10.0/100 or less.

8. The polyisocyanate composition according to Claim 1 or 2, further comprising a urethane group, wherein a molar ratio of said urethane group and said isocyanurate group (urethane group/isocyanurate group) is 0.5/100 or more and 50.0/100 or less.

9. The polyisocyanate composition according to Claim 1 or 2, which has a viscosity of 400 mPa s or more and 20,000 mPa s or less at 25°C.

10. The polyisocyanate composition according to Claim 1 or 2, wherein said anionic compound is one or more sulfonic acids selected from the group consisting of a sulfonic acid containing a hydroxyl group and a sulfonic acid containing an amino group.

11. The polyisocyanate composition according to Claim 8, wherein a sulfonic acid group of said anionic compound is neutralized with an inorganic base or an organic amine compound.

12. The polyisocyanate composition according to Claim 1 or 2, wherein said anionic compound is a compound represented by the following general formula (1),
[Chemical Formula 1]

$$HO - R^{11} - SO_3H \qquad (1)$$

(wherein $R^{11}$ is a hydrocarbon group having 1 to 10 carbon atoms which may contain at least one member selected from the group consisting of a hydroxyl group, an ether bond, an ester bond, a carbonyl group, and an imino group; $R^{11}$ may contain a ring structure; and said ring structure is an aromatic ring, a 5-membered or 6-membered ring containing two nitrogen atoms, or a 5-membered or 6-membered ring containing a nitrogen atom and an oxygen atom.)

13. The polyisocyanate composition according to Claim 1 or 2, wherein said anionic compound is a compound represented by the following general formula (2),

[Chemical Formula 2]

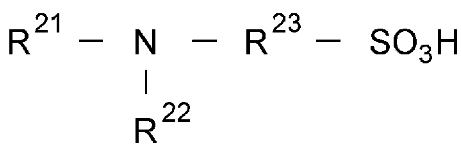

(2)

(wherein $R^{21}$ and $R^{22}$ each independently represent a hydrogen atom or a hydrocarbon group having 1 to 12 carbon

atoms which may contain a hydroxyl group; at least one of $R^{22}$ and $R^{23}$ is a hydrogen atom; and $R^{23}$ is a hydrocarbon group having 1 to 12 carbon atoms which may contain a hydroxyl group.)

**14.** A blocked polyisocyanate composition, which is a reaction product of the polyisocyanate composition according to Claim 1 or 2 and a thermally dissociable blocking agent.

**15.** A polyurethane resin composition comprising the polyisocyanate composition according to Claim 1 or 2.

**16.** A coating composition comprising the polyisocyanate composition according to Claim 1 or 2.

**17.** A coated substrate coated with the coating composition according to Claim 16.

Europäisches Patentamt
European Patent Office
Office européen des brevets

# EUROPEAN SEARCH REPORT

Application Number
EP 23 17 8940

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/069563 A1 (COVESTRO DEUTSCHLAND AG [DE]) 7 April 2022 (2022-04-07) * page 32, line 29 - page 33, line 18; table 1 * | 1-17 | INV. C08G18/08 C08G18/09 C08G18/16 C08G18/18 C08G18/62 C08G18/70 C08G18/73 C08G18/79 C08G18/80 C08G64/30 C09D175/04 |
| T | CN 115 873 485 A (WANHUA CHEMICAL GROUP CO LTD) 31 March 2023 (2023-03-31) * paragraph [0030] * | 1-17 | |
| X,P | EP 4 015 554 A1 (COVESTRO DEUTSCHLAND AG [DE]) 22 June 2022 (2022-06-22) * paragraphs [0182], [0183]; table 1 * | 1-17 | |
| X | US 5 334 637 A (ZWIENER CHRISTIAN [DE] ET AL) 2 August 1994 (1994-08-02) * examples 3-5,7,12,13,15,17,18 * | 1-17 | |
| X | US 2004/260014 A1 (MUNZMAY THOMAS [DE] ET AL) 23 December 2004 (2004-12-23) * example 2 * | 1-17 | TECHNICAL FIELDS SEARCHED (IPC) |
| X | EP 3 812 411 A1 (ASAHI CHEMICAL IND [JP]) 28 April 2021 (2021-04-28) * paragraph [0208]; example 21 * | 1-17 | C08G C09J C09D |
| A | EP 1 488 933 A1 (JUJO PAPER CO LTD [JP]) 22 December 2004 (2004-12-22) * paragraph [0065] * | 1-17 | |
| X,P | EP 4 063 418 A1 (ASAHI CHEMICAL IND [JP]) 28 September 2022 (2022-09-28) * paragraph [0234]; example 20 * | 1-17 | |
| X | EP 3 778 686 A1 (ASAHI CHEMICAL IND [JP]) 17 February 2021 (2021-02-17) * paragraphs [0280], [0291] * | 1-17 | |
| | -/-- | | |

The present search report has been drawn up for all claims

1

| Place of search | Date of completion of the search | Examiner |
|---|---|---|
| Munich | 13 October 2023 | Lanz, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 23 17 8940

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/158348 A1 (NISHIGUCHI SHIGEO [JP] ET AL) 21 August 2003 (2003-08-21)<br>* paragraphs [0055], [0056] *<br>----- | 14 | |

TECHNICAL FIELDS SEARCHED (IPC)

1

The present search report has been drawn up for all claims

| Place of search | Date of completion of the search | Examiner |
|---|---|---|
| Munich | 13 October 2023 | Lanz, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 17 8940

This annex lists the patent family members relating to the patent documents cited in the above-mentioned European search report. The members are as contained in the European Patent Office EDP file on
The European Patent Office is in no way liable for these particulars which are merely given for the purpose of information.

13-10-2023

| Patent document cited in search report | Publication date | Patent family member(s) | Publication date |
|---|---|---|---|
| WO 2022069563 A1 | 07-04-2022 | CN 116209693 A | 02-06-2023 |
| | | EP 4222186 A1 | 09-08-2023 |
| | | WO 2022069563 A1 | 07-04-2022 |
| CN 115873485 A | 31-03-2023 | NONE | |
| EP 4015554 A1 | 22-06-2022 | NONE | |
| US 5334637 A | 02-08-1994 | AT E124933 T1 | 15-07-1995 |
| | | CA 2085495 A1 | 21-06-1993 |
| | | DE 4142275 A1 | 24-06-1993 |
| | | EP 0548669 A2 | 30-06-1993 |
| | | ES 2076001 T3 | 16-10-1995 |
| | | JP H05271177 A | 19-10-1993 |
| | | US 5334637 A | 02-08-1994 |
| US 2004260014 A1 | 23-12-2004 | CN 1572811 A | 02-02-2005 |
| | | DE 10328064 A1 | 13-01-2005 |
| | | EP 1491601 A2 | 29-12-2004 |
| | | JP 2005015796 A | 20-01-2005 |
| | | US 2004260014 A1 | 23-12-2004 |
| EP 3812411 A1 | 28-04-2021 | CN 112708106 A | 27-04-2021 |
| | | EP 3812411 A1 | 28-04-2021 |
| EP 1488933 A1 | 22-12-2004 | CA 2478521 A1 | 12-09-2003 |
| | | CN 1638973 A | 13-07-2005 |
| | | DE 60312140 T2 | 22-11-2007 |
| | | EP 1488933 A1 | 22-12-2004 |
| | | JP 3880872 B2 | 14-02-2007 |
| | | JP 2003251941 A | 09-09-2003 |
| | | KR 20040086472 A | 08-10-2004 |
| | | US 2006072429 A1 | 06-04-2006 |
| | | WO 03074286 A1 | 12-09-2003 |
| EP 4063418 A1 | 28-09-2022 | CN 115124682 A | 30-09-2022 |
| | | EP 4063418 A1 | 28-09-2022 |
| | | JP 2022151826 A | 07-10-2022 |
| EP 3778686 A1 | 17-02-2021 | CN 111741991 A | 02-10-2020 |
| | | EP 3778686 A1 | 17-02-2021 |
| | | JP 6999027 B2 | 18-01-2022 |
| | | JP WO2019188781 A1 | 03-12-2020 |
| | | WO 2019188781 A1 | 03-10-2019 |
| US 2003158348 A1 | 21-08-2003 | CA 2403453 A1 | 17-03-2003 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 23 17 8940

This annex lists the patent family members relating to the patent documents cited in the above-mentioned European search report. The members are as contained in the European Patent Office EDP file on
The European Patent Office is in no way liable for these particulars which are merely given for the purpose of information.

13-10-2023

| Patent document cited in search report | Publication date | Patent family member(s) | Publication date |
|---|---|---|---|
| | | CN 1408802 A | 09-04-2003 |
| | | DE 10242897 A1 | 03-04-2003 |
| | | JP 3490991 B2 | 26-01-2004 |
| | | JP 2003082283 A | 19-03-2003 |
| | | US 2003158348 A1 | 21-08-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9328654 A
- JP 4806511 B
- WO 2015035673 A